# EUROPÄISCHE PATENTSCHRIFT

(11) **EP 2 166 061 B1**
(45) Veröffentlichungstag und Bekanntmachung des Hinweises auf die Patenterteilung: **03.04.2013**
(21) Anmeldenummer: 09170775.2
(22) Anmeldetag: 18.09.2009
(51) Int. Cl.: C10B 53/02, C10L 5/40, C10L 9/00, C10L 9/08

(54) **Vorrichtung und Verfahren zur Behandlung von Biomasse**
Method and device for processing biomass
Dispositif et procédé destinés au traitement de biomasse

(30) Priorität: 18.09.2008 DE 102008047883
(43) Veröffentlichungstag der Anmeldung: 24.03.2010
(73) Patentinhaber: Artec Biotechnologie GmbH, 97631 Bad Königshofen (DE)
(72) Erfinder: Hahn, Volker, 97631, Bad Königshofen (DE); Wieczorek, Peter, 97631, Bad Königshofen (DE)
(74) Vertreter: Schneider, Günther Martin

(56) Entgegenhaltungen:
- WO-A-2008/095589
- WO-A-2008/138637
- DE-A1- 1 932 405
- DE-A1- 19 615 974
- US-A1- 2008 006 518

## Beschreibung

Die betrifft Erfindung ein Verfahren und eine Vorrichtung zur hydrothermalen Karbonisierung von Biomasse.

Hydrothermale Karbonisierung bedeutet "wässrige Verkohlung bei erhöhter Temperatur". Es ist ein chemisches Verfahren zur einfachen und hocheffizienten Herstellung von kohleartigen Produkten aus Biomasse, wobei Energie freigesetzt wird.

Das Verfahren der hydrothermalen Karbonisierung läuft im Wesentlichen folgendermaßen ab:
a) Biomasse wird in einem Druckgefäß zusammen mit Wasser in saurem Milieu unter Luftabschluss auf 180°C bis 230°C erhitzt. Dabei werden Kohlehydrate dehydriert, d.h. Wasser wird abgetrennt. Als Katalysator kann eine geringe Menge Zitronensäure zugesetzt werden.
b) Der einer Aufwärmphase nachfolgende Prozess verläuft exotherm, d.h. unter Freisetzung von Wärmeenergie.
c) Vereinfachend unter Bezeichnung der pflanzlichen Biomasse als Zucker spielt sich dabei folgende chemische Veränderung ab:

   C₆H₁₂O₆ → C₆H₆O₃ + 2H_{2O} → C₆H₁₂O + 5H₂O

Über mehrere Zwischenstufen entsteht nach etwa 4 bis 24 Stunden Prozesslaufzeit eine Pflanzenkohle mit dem Brennwert fossiler Kohle, die sich leicht transportieren und nutzen lässt.
d) Die in der ursprünglichen Biomasse enthaltenen Nährstoffe bleiben dabei zu 100 % in einer wässrigen Lösung zurück und können beispielsweise als Dünger Verwendung finden.

Grundsätzlich kann bei der hydrothermalen Karbonisierung jede Art von Biomasse genutzt werden. Im Unterschied zu anderen Nutzungen von Biomasse ist die Verwendbarkeit für die hydrothermale Karbonisierung nicht auf Pflanzenmasse niedriger Feuchtegehalte beschränkt, deren Klima schützende Wirkung durch erforderliche Trocknungsmaßnahmen reduziert wird, sondern es wird sogar Wasser hinzu gegeben, um die hydrothermale Karbonisierung durchzuführen. So können auch bisher kaum nutzbare Pflanzenmaterialien, wie etwa Auswuchs aus der Landschaftspflege, Gehölzschnitt, Material aus Grüngut-Sammelstellen, Rasenschnitt usw. sinnvoll genutzt und das darin vorhandene CO₂ fast vollständig gebunden werden, ohne in Folge mikrobieller Umsetzung zusätzliches CO₂ und Methan zu produzieren.

Insbesondere ist jegliches organische Material nutzbar, etwa eigens angebaute Energiepflanzen, Reste landwirtschaftlicher Produktion (z.B. Stroh), das Endsubstrat aus Biogasanlagen, Treber aus dem Brauereigewerbe, Bioabfälle, Klärschlamm und Rohschlamm aus der Abwasserreinigung, Gülle etc. Besonders hervorzuheben bei der hydrothermalen Karbonisierung ist, dass auch Klärschlamm, welcher auch als Mitverursacher des Klimawandels eine Rolle spielt, zu kohleartigen Produkten verarbeitet werden kann.

Konventionell wird Klärschlamm unter hohem Energieaufwand getrocknet und anschließend verbrannt, sofern er nicht auf landwirtschaftliche Nutzflächen ausgebracht wird. Nachteile der Verbrennung liegen in dem notwendig hohen Energieeintrag, dem Verlust wertvoller pflanzenverwertbarer Nährstoffe, mangelnde CO₂-Stabilisierung, die Freisetzung klimaschädlicher Gase sowie besonders hohe Entsorgungskosten.

Ergebnis einer hydrothermalen Karbonisierung können unterschiedliche Produkte mit unterschiedlichen Nutzungspotentialen sein:
a) Stein- und Braunkohle
   Je nach Inhaltsstoffen und Eigenschaften, gegebenenfalls abhängig vom "Reifegrad" der hydrothermalen Karbonisierung, können die kohleartigen Substanzen etwa zur Ausbringung auf Ackerboden, zur Energiegewinnung durch direkte Verbrennung, zum Betrieb neuartiger Brennstoffzellen oder zur Brikettierung des Kohleschlamms Verwendung finden.
b) Industrie-Rohstoffe
   Realisierbar ist der Einsatz von Sorptionskohle zur Reinigung, Gebäudeisolierung, als Betonzuschlagstoff, Straßenbelag usw.
c) Humus
   Humusartige Produkte können zur Bodenverbesserung und zur Begrünung erodierter Standorte eingesetzt werden.
d) Dünger
   Die aus den Startsubstraten vollständig in der Lösung am Ende der hydrothermalen Karbonisierung verbleibenden Nährstoffe prädestinieren diese als Düngemittel.
e) Wärmeenergie
   Zum Start des Prozesses der hydrothermalen Karbonisierung muss zunächst Energie zugeführt werden, ab 180°C bis etwa 230°C wird aber erheblich mehr Wärme gewonnen, als zuvor investiert wird (sog. exotherme Reaktion). Diese kann beispielsweise als Nah- oder Fernwärme genutzt werden.

Bei derzeit bekannten industriellen Verfahren zur Bearbeitung bzw. Umsetzung von Biomasse, beispielsweise die Vergärung von Biomasse, bei der Ethanol und ebenfalls CO₂ entstehen, oder der Pyrolyse, bei der Biomasse unter Luftabschluss bei extrem hohen Temperaturen verkohlt wird, was allerdings voraussetzt, dass das Pflanzenmaterial trocken ist, kann weder jede Art von Biomasse verwendet werden noch kann CO₂ effizient in dem Endprodukt gebunden werden.

Bei dem Pyrolyse-Verfahren etwa ist eine ständige Energiezufuhr notwendig, um die für das Verfahren notwendigen extrem hohen Temperaturen bereitzustellen, was zu einer negativen Beeinflussung der Energiebilanz des Pyrolyse-Verfahrens führt.

Die Herstellung von kohlartigen Produkten mit Hilfe der hydrothermalen Karbonisierung ist bisher nur im Labormaßstab als diskontinuierliches Verfahren, d.h. als Verfahren im Batch-Betrieb möglich. Im Batch-Betrieb wird eine bestimmte Menge von Biomasse in ein Reaktionsgefäß gegeben, aufgeheizt und nach Ablauf der Prozesszeit wieder aus dem Reaktionsgefäß entnommen. Nachteilig ist hierbei, dass die hydrothermale Verarbeitung bzw. Karbonisierung von Biomasse im Batch-Betrieb für die zu verarbeitende Menge an Biomasse jeweils eine bestimmte Menge an Wärmeenergie zum Starten des Prozesses benötigt, die dem Reaktionsgefäß anschließend wieder entzogen werden muss, um dieses wieder abzukühlen, was sich negativ auf die Energiebilanz des Prozesses auswirkt und im großen Maßstab nicht praktikabel erscheint.

Die nachveröffentlichte WO 2008/138637 A2 beschreibt eine Vorrichtung zur hydrothermalen Karbonisierung von Biomasse. Die Vorrichtung weist einen Reaktor, einen Vorwärmer und einen Nachbereiter auf. Vorwärmer und Reaktor bzw. Reaktor und Nachbereiter sind jeweils mit einer Einrichtung zur Druckerhöhung bzw. Druckminderung miteinander gekoppelt. Das Reaktionsprodukt wird unter hohem Druck bei hoher Temperatur aus dem Reaktor ausgetragen und einem Trenner zum Trennen von Wasser und Kohle zugeführt.

Die US 200810006518 A1 beschreibt eine Vorrichtung zur Karbonisierung von Biomasse. Die Vorrichtung weist vier Reaktoren und eine Abkühleinrichtung auf. Die vier Reaktoren sind kaskadenartig miteinander gekoppelt. In den vier Reaktoren wird die Biomasse jeweils auf eine vorbestimmte Temperatur aufgeheizt, bevor die Biomasse einem Reaktor entnommen wird und dem jeweiligen nachfolgenden Reaktor zugeführt wird. Nach Abschluss der Karbonisierung in dem vierten Reaktor wird Biomasse dem vierten Reaktor entnommen und der Abkühleinrichtung zugeführt.

Aus der WO 2008/095589 A1 ist eine Vorrichtung zur hydrothermalen Karbonisierung von Biomasse bekannt. Die Vorrichtung weist ein Reaktorrohr auf, welches in einem mit einem Wärmeübertragungsmedium befüllten Behältnis angeordnet ist. Das Wärmeübertragungsmedium ist vorgesehen, um das Reaktorrohr auf eine einheitliche bzw. vereinheitlichte Temperatur aufzuheizen, sodass der gesamte Prozess der hydrothermalen Karbonisierung bei einer im Wesentlichen einheitlichen Temperatur erfolgt.

Aufgabe der Erfindung ist es daher, eine Vorrichtung und ein Verfahren zur hydrothermalen Behandlung, insbesondere zur hydrothermalen Karbonisierung von Biomasse mit einer verbesserten Energiebilanz bereitzustellen, wobei jede Art von Biomasse verwendet werden kann und welche in industriellem Maßstab einsetzbar sind.

Gemäß der Erfindung bereitgestellt wird demnach eine Vorrichtung zur kontinuierlichen hydrothermalen Karbonisierung von Biomasse, welche einen in vier Reaktorabschnitte unterteilten Reaktor, durch welchen die zu behandelnde Biomasse kontinuierlich hindurch förderbar ist, aufweist, wobei jeder der Reaktorabschnitte rohrförmig ausgestaltet ist, wobei die Reaktorabschnitte zusammen ein durchgängiges Reaktorrohr bilden, wobei das Reaktorrohr horizontal ausgerichtet ist, wobei
- der erste Reaktorabschnitt (P1) zum Aufheizen der Biomasse ausgestaltet ist, wobei an dem ersten Reaktorabschnitt eine ein Thermofluid aufnehmende Heizeinrichtung angeordnet ist, welche ausgestaltet ist, die Biomasse auf eine Temperatur zwischen 160°C und 210°C zu erwärmen,
- der zweite Reaktorabschnitt (P2) zum Durchführen eines Polymerprozesses ausgestaltet ist, wobei an dem zweiten Reaktorabschnitt eine erste ein Thermofluid aufnehmende Heiz-/Kühleinrichtung angeordnet ist, welche ausgestaltet ist, die Biomasse auf einer Temperatur zwischen 170°C und 220°C zu halten,
- der dritte Reaktorabschnitt (P3) zum Durchführen eines Reifungsprozesses ausgestaltet ist, wobei an dem dritten Reaktorabschnitt eine zweite ein Thermofluid aufnehmende Heiz-/Kühleinrichtung angeordnet ist, welche ausgestaltet ist, die Biomasse auf einer Temperatur zwischen 190°C und 210°C zu halten, und
- der vierte Reaktorabschnitt (P4) zum Abkühlen der Biomasse ausgestaltet ist, wobei an dem vierten Reaktorabschnitt eine ein Thermofluid aufnehmende Kühleinrichtung angeordnet ist, welche ausgestaltet ist, die Biomasse auf eine Temperatur unterhalb von 180°C abzukühlen, und
wobei zumindest der erste, der zweite und der dritte Reaktorabschnitt (P1, P2, P3) druckbeständig ausgestaltet sind, und
wobei die erste Heiz-/Kühleinrichtung mit der zweiten Heiz-/Kühleinrichtung so gekoppelt ist, damit zumindest ein Teil des Thermofluids der ersten Heiz-/Kühleinrichtung der zweiten Heiz-/Kühleinrichtung zuführbar ist.

Der gesamte Karbonisierungsprozess, d.h. Aufheizen der Biomasse, Durchführen des Polymerprozesses, Durchführen des Reifungsprozesses und Abkühlen der Biomasse bzw. des Produktes, kann so in vorteilhafter Weise in einem Reaktor bzw. einem Reaktorrohr, welches durch die rohrförmigen Reaktorabschnitte gebildet wird, durchgeführt werden. Das Reaktionsprodukt muss zum Zwecke des Abkühlens nicht mehr dem Reaktor entnommen werden, was die Prozessführung wesentlich vereinfacht, da die Entnahme abgekühlter Reaktionsprodukte weniger Einfluss auf die Prozessführung in den ersten drei Reaktorabschnitten hat als eine Entnahme eines Reaktionsprodukts unmittelbar nach der dritten Phase. Weiter ist es vorteilhaft, dass die einzelnen Reaktorabschnitte nicht thermisch voneinander getrennt sein müssen, was den Aufbau und Betrieb des Reaktors wesentlich vereinfacht.

Ein Wesentlicher Vorteil des vierten Reaktorabschnittes, welcher zum Abkühlen der Biomasse ausgestaltet ist, ist, dass die während des Abkühlens freigesetzte bzw. entzogene Wärmeenergie beispielsweise gezielt für das Aufheizen der Biomasse in der ersten Phase genutzt werden kann. Gleichzeitig wird damit auch erreicht, dass bei der Entnahme des Reaktionsproduktes der Verlust an Wärmeenergie gering gehalten wird, da bei der Entnahme kein Dampf abgelassen werden muss bzw. ein unkontrollierter Dampfaustritt vermieden wird. Der Wirkungsgrad der hydrothermalen Karbonisierung kann so deutlich verbessert werden.

An dem vierten Reaktorabschnitt kann eine Kühleinrichtung angeordnet sein. Damit kann der vierte Reaktorabschnitt gekühlt werden bzw. kann dem Reaktionsprodukt in dem vierten Reaktorabschnitt Wärmeenergie entzogen werden.

Zumindest eine der Heiz-/Kühleinrichtungen kann als ein den Reaktor umgebenden Heiz-/Kühlmantel ausgestaltet sein. Der Heiz-/Kühlmantel kann mindestens zwei Kammern aufweisen, welche thermisch voneinander getrennt sind.

Die Kammern des Heiz-/Kühlmantels können parallel zur Längsachse des Reaktors verlaufen, wobei eine erste Kammer als Heizeinrichtung ausgestaltet ist und eine zweite Kammer als Kühleinrichtung ausgestaltet ist.

Der Reaktor weist eine Einlassöffnung und eine Auslassöffnung aufweist, wobei der Querschnitt der Einlassöffnung und/oder der Querschnitt der Auslassöffnung im Wesentlichen dem Querschnitt des Reaktors entsprechen können.

Unter einem Reaktorrohr werden auch gekrümmte Rohre und Rohre bzw. Röhren, welche aus mehreren Rohrsegmenten zusammengesetzt sind, verstanden.

Der Reaktor kann eine Anzahl miteinander gekoppelter Reaktorsegmente aufweisen, wobei die Reaktorsegmente so miteinander gekoppelt sind, dass eine druckdichte Koppelung der Reaktorsegmente erreichbar ist.

In einer Ausführungsform können die einzelnen Reaktorsegmente mit einer Fördereinrichtung miteinander gekoppelt sein. Damit kann der Transport von einem Reaktorsegment in das andere Reaktorsegment unterstützt werden. Dies ist bei besonders langen Reaktoren bzw. Reaktorrohren vorteilhaft. Diese Fördereinrichtung kann auch innerhalb des Reaktorrohres angeordnet sein.

In einer Ausführungsform kann zumindest ein Reaktorsegment drehbar um die eigene Längsachse ausgestaltet sein. Ablagerungen an der Rohrwandung können so vorteilhaft reduziert werden.

Der Reaktor kann eine Auslassöffnung zur Entnahme von Zwischenprodukten aufweisen, wobei an der Auslassöffnung zumindest zwei hintereinander angeordnete Verschlussvorrichtungen angeordnet sein können.

Des Weiteren wird durch die Erfindung ein Verfahren zur hydrothermalen Karbonisierung von Biomasse bereitgestellt, wobei Biomasse als Edukt kontinuierlich einem druckbeständigen und rohrförmig ausgestalteten Reaktor über mindestens eine Einlassöffnung zugeführt wird, wobei der vordere Teil des Reaktors mit einer ein Thermofluid aufnehmenden Heizeinrichtung auf eine Temperatur zwischen 160°C und 210°C erwärmt wird, um den hydrothermalen Karbonisierungsprozess in Gang zu setzen, wobei ein zweiter Teil des Reaktors mit einer ersten ein Thermofluid aufnehmenden Heiz-/Kühleinrichtung auf einer Temperatur zwischen 170°C und 220°C gehalten wird, wobei ein dritter Teil des Reaktors mit einer zweiten ein Thermofluid aufnehmenden Heiz-/Kühleinrichtung auf einer Temperatur zwischen 190°C und 210°C gehalten wird, um den Karbonisierungsprozess aufrecht zu erhalten, wobei der hintere Teil des Reaktors mit einer ein Thermofluid aufnehmenden Kühleinrichtung auf eine Temperatur unterhalb von 180°C abgekühlt wird, um den Karbonisierungsprozess zu beenden, und wobei zumindest ein Teil des Thermofluids der ersten Heiz-/Kühleinrichtung der zweiten Heiz-/Kühleinrichtung zugeführt wird.

Der gesamte Karbonisierungsprozess läuft dabei innerhalb des rohrförmig ausgestalteten Reaktors ab. Durch das gezielte Abkühlen des hinteren Teils des Reaktors, also des vierten Teils, kann der Wirkungsgrad noch weiter erhöht werden, weil aufgrund des Abkühlens eine Entnahme von Reaktionsprodukten weitestgehend ohne ein unkontrolliertes Entweichen von Dampf und damit auch von Wärmeenergie erfolgen kann.

Synchron zum Zuführen des Edukts können Endprodukte und/oder Zwischenprodukte dem Reaktor entnommen werden, wobei das Zuführen und die Entnahme derart erfolgt, dass der Innendruck des Reaktors aufrechterhalten bleibt.

Dem Edukt kann, bevor es dem Reaktor zugeführt wird, Wasser und/oder ein Katalysator, vorzugsweise Zitronensäure, zugegeben werden.

Während des Karbonisierungsprozesses kann zumindest der Innendruck des Reaktors und die Innentemperatur des Reaktors, vorzugsweise fortlaufend, überwacht werden.

Das in den entnommenen Zwischenprodukten bzw. Endprodukten enthaltene Wasser kann abgeschieden werden und zumindest ein Teil des abgeschiedenen Wassers kann dem Edukt zugeführt werden.

Bevorzugt kann die Reaktorwandung mit einer Heiz-/Kühleinrichtung an einem ersten Bereich entlang der Längsachse des Reaktors erwärmt werden und/oder an einem zweiten Bereich entlang der Längsachse des Reaktors abgekühlt werden, wobei die Heiz-/Kuhleinrichtung hinsichtlich dieser Bereiche thermisch voneinander getrennt ist oder der erste Bereich und der zweite Bereich thermisch voneinander getrennt sind.

Durch die Erfindung wird auch eine karbonisierte Biomasse bereitgestellt, welche durch das erfindungsgemäße Verfahren erhältlich ist. Insbesondere wird durch die Erfindung eine karbonisierte Biomasse bereitgestellt, welche durch das erfindungsgemäße Verfahren erhältlich ist, bei dem der vordere Teil des Reaktors auf eine Temperatur zwischen 160°C und 200°C erwärmt wird, der zweite Teil des Reaktors zwischen einer Temperatur von 170°C und 220°C gehalten wird, der dritte Teil des Reaktors zwischen einer Temperatur von 190°C und 210°C gehalten wird, der hintere Teil des Reaktors auf eine Temperatur unterhalb 180°C, vorzugsweise unterhalb 100°C abgekühlt wird, die Reaktionszeit im zweiten Reaktorabschnitt zwischen 1 Stunde und 8 Stunden beträgt, und die Reaktionszeit im dritten Reaktorabschnitt zwischen 2 Stunden und 14 Stunden beträgt.

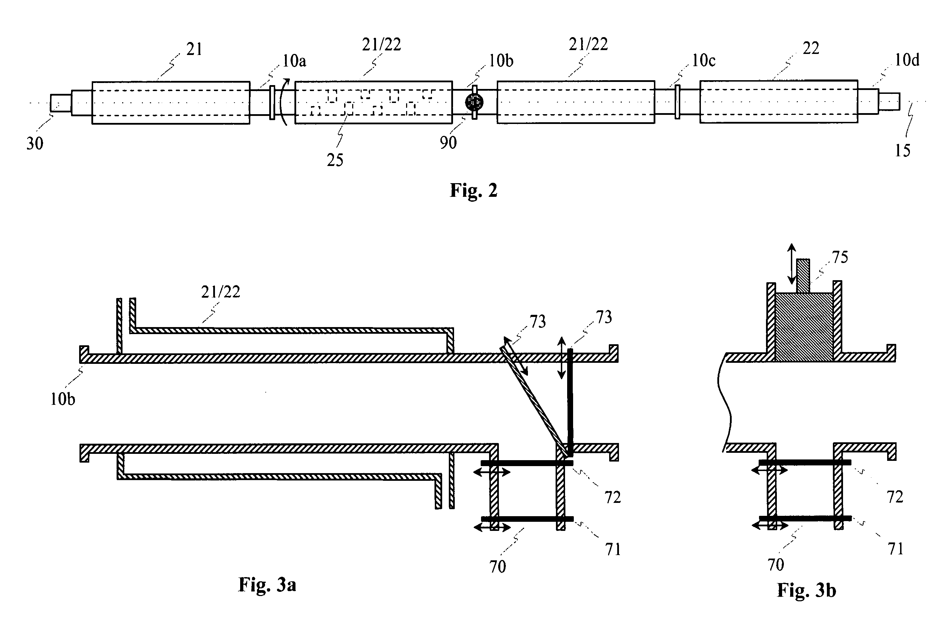

Weitere Einzelheiten und Merkmale der Erfindung ergeben sich aus den Ansprüchen und der nachfolgenden Beschreibung in Verbindung mit der Zeichnung. Es zeigt:
- Fig.: 1 eine schematische Darstellung einer erfindungsgemäßen Vorrichtung zur hydrothermalen Behandlung, insbesondere zur hydrothermalen Karbonisierung von Biomasse;
- Fig.: 2 eine schematische Darstellung eines hydrothermalen Reaktors, bestehend aus mehreren Segmenten;
- Fig.: 3a ein Segment eines in Fig. 2 gezeigten hydrothermalen Reaktors mit einer zusätzlichen Auslassöffnung zur Entnahme von Zwischenprodukten;
- Fig.: 3b eine alternative Ausführungsform eines Reaktorsegmentes, welches ausgebildet ist, um Zwischenprodukte dem Reaktor zu entnehmen;

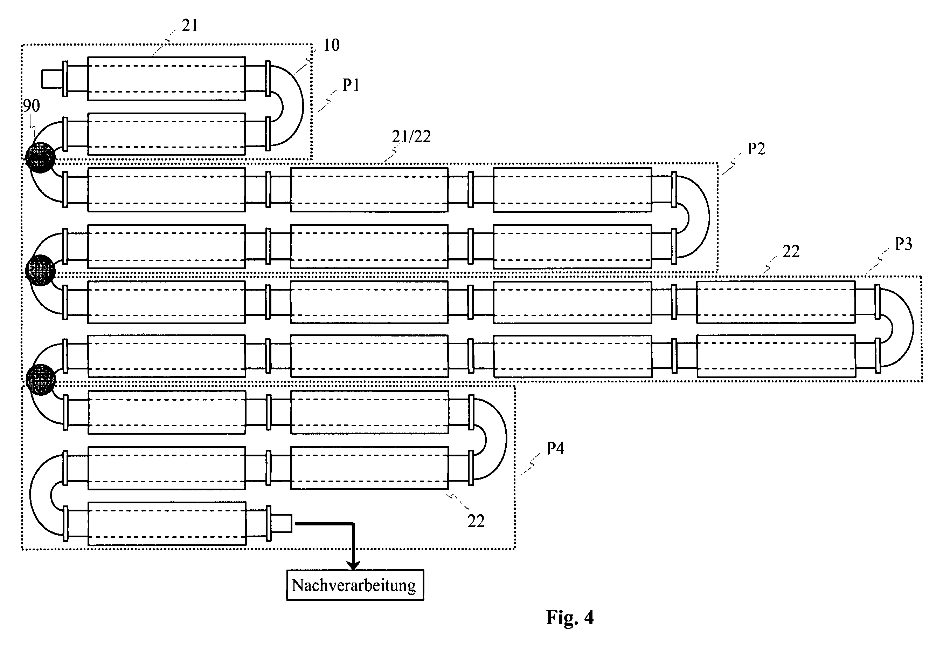

- Fig. 4: eine Ausführungsform eines rohrförmigen hydrothermalen Reaktors, bestehend aus einer Anzahl von Reaktorsegmenten, wobei für jede Phase des Karbonisierungsprozesses eine unterschiedliche Anzahl von Reaktorsegmenten vorgesehen ist;
- Fig.: 5 eine Ausführungsform eines hydrothermalen Reaktors bzw. eines ersten Segments eines hydrothermalen Reaktors mit einer im Innern des Reaktors angeordneten Heizeinrichtung; und
- Fig.: 6 eine vorteilhafte Ausgestaltung einer Heiz-/Kühleinrichtung.

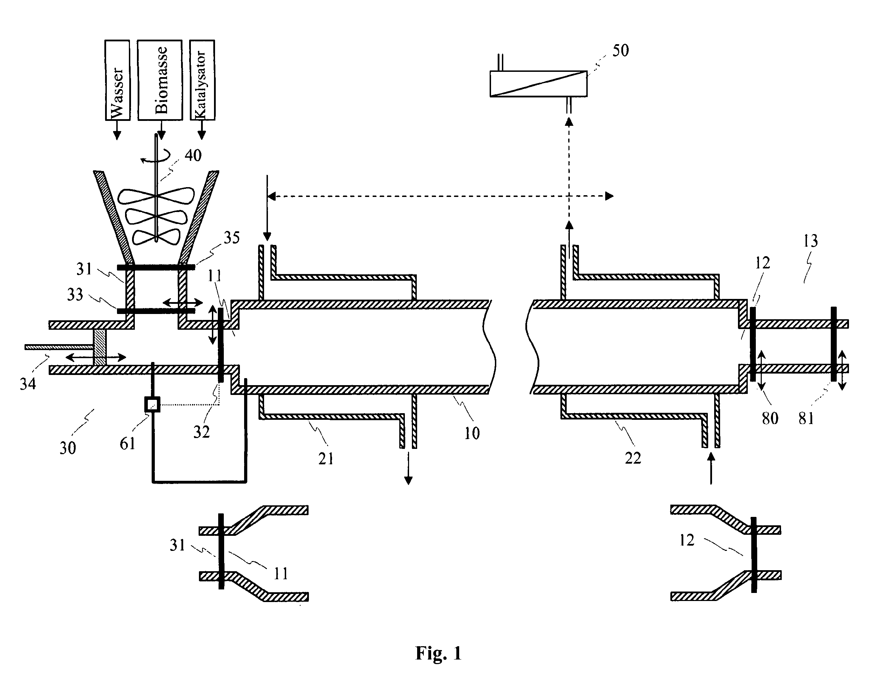

**Fig. 1** zeigt eine schematische Darstellung einer Vorrichtung zur hydrothermalen Karbonisierung von Biomasse im Längsschnitt, wobei der Reaktor im Wesentlichen kontinuierlich bzw. quasi-kontinuierlich betrieben wird, d.h. es werden kontinuierlich bzw. in regelmäßigen Abständen Biomasse dem Reaktor zugeführt lichen umfasst die Vorrichtung einen druckbeständigen, vorzugsweise rohrförmig ausgestalteten Reaktor 10, eine Zuführeinrichtung 30 und eine Entnahmeeinrichtung 13.

Der Reaktor 10 ist im Wesentlichen in vier Abschnitte gegliedert, wobei im ersten Reaktorabschnitt (P1) ein Aufheizen der Biomasse durchgeführt wird, im zweiten Reaktorabschnitt (P2) eine Polymerphase durchgeführt wird, im dritten Reaktorabschnitt (P3) eine Reifungsphase erfolgt, und im vierten Reaktorabschnitt (P4) ein Abkühlen der karbonisierten Biomasse erfolgt. Die Längen der einzelnen Reaktorabschnitte sind so gewählt, dass in Abhängigkeit von der Strömungsgeschwindigkeit der Biomasse die für die hydrothermale Karbonisierung erforderlichen Verweilzeiten in den einzelnen Reaktorabschnitten erreicht werden. Die vier Abschnitte bilden zusammen einen rohrförmigen Reaktor bzw. ein Reaktorrohr, wobei unter einem rohrförmigen Reaktor bzw. einem Reaktorrohr auch gekrümmte Rohre oder Röhren und Rohrsegmente, welche zu einem Rohr bzw. zu einer Röhre zusammengefügt werden, verstanden werden. Die Verweilzeiten der Biomasse in den einzelnen Reaktorabschnitten richten sich dabei nach dem gewünschten durch hydrothermale Karbonisierung zu erzeugenden Endprodukt. So kann beispielsweise für Humus als gewünschtes Endprodukt die Verweilzeit in dem zweiten und dritten Reaktorabschnitt niedrig gewählt werden, sodass bei gleicher Strömungsgeschwindigkeit die Länge dieser Reaktorabschnitte entsprechend verkürzt werden kann. Alternativ kann auch die Strömungsgeschwindigkeit erhöht werden, indem die Abstände zwischen denen Biomasse zugeführt wird verkürzt werden.

Die Verweilzeit in dem zweiten Reaktorabschnitt beträgt je nach gewünschtem Endprodukt zwischen einer Stunde und acht Stunden. Die Verweilzeit in dem dritten Reaktorabschnitt beträgt je nach gewünschtem Endprodukt zwischen einer Stunde und 14 Stunden. Die Verweilzeiten in dem ersten und dem vierten Reaktorabschnitt kann von Heizleistung bzw. von der Kühlleistung abhängig gemacht werden.

Da der Reaktor 10 kontinuierlich bzw. quasi-kontinuierlich betrieben wird, bedeutet Verweilzeit in diesem Zusammenhang die Zeit, welche die Biomasse benötigt bzw. benötigen muss, um den entsprechenden Reaktorabschnitt zu passieren.

Besonders Vorteilhaft ist es, wenn der Durchmesser des rohrförmigen Reaktors 10 klein ist im Verhältnis zur Länge des Reaktors. Dies führt zu einer Qualitätserhöhung des Endproduktes aus mehreren Gründen:
- Zunächst kann die Strömungsgeschwindigkeit der zu verarbeitenden Biomasse in dem Reaktor 10 effektiv erhöht werden, da der Karbonisierungsprozess je nach gewünschtem Endprodukt in einem vorbestimmten Zeitfenster von etwa 5h bis 24h, bevorzugt von etwa 6h bis 14h abläuft und die Strömungsgeschwindigkeit so mit zunehmender Länge bei gleich bleibendem Durchmesser des Reaktors 10 erhöht werden kann.
- Eine hohe Strömungsgeschwindigkeit wirkt sich positiv hinsichtlich der Vermeidung von Ablagerungen an der Reaktorinnenwand aus.
- Der Einfluss der axialen Rückvermischung auf den Reaktionsprozess, welcher bei zylinderförmigen Bioreaktoren mit einer Länge von bis zu dem zehnfachen des Durchmessers mit baulich komplexen Trenneinrichtungen minimiert wird, kann auch ohne Trenneinrichtungen zwischen den Reaktionsphasen deutlich verringert werden. Die einzelnen Prozessphasen laufen während des Karbonisierungsprozesses weitgehend unabhängig voneinander ab bzw. beeinflussen sich nicht gegenseitig.
- Weil die Länge des Reaktorrohres groß ist im Verhältnis zum Durchmesser des Reaktorrohres, kann der vierte Reaktorabschnitt abgekühlt werden, ohne den Reaktionsprozess in den ersten drei Reaktorabschnitten zu beeinflussen.

Die Zuführeinrichtung 30 ist vorzugsweise so ausgestaltet, dass die in den Reaktor 10 einzubringende Biomasse gegen den Reaktordruck eingebracht werden kann. Während des Karbonisierungsprozesses beträgt der Innendruck des Reaktors ca. 10 bis 30 bar, vorzugsweise ca. 15 bar. Gleichzeitig herrscht im Reaktorinneren je nach Prozessphase eine Temperatur zwischen 30 und 250°C, bevorzugt zwischen 50 und 210°C. Um den Karbonisierungsprozesses während des Beschickens des Reaktors bzw. während der Entnahme von Zwischenprodukten oder Endprodukten aus dem Reaktor aufrecht zu erhalten, ist es vorteilhaft, die Beschickung des Reaktors bzw. die Entnahme der Zwischen- oder Endprodukte so zu gestalten, dass der Innendruck und die Innentemperatur des Reaktors im Wesentlichen erhalten bleiben.

Um zu gewährleisten, dass der Innendruck bzw. die Innentemperatur des Reaktors während des Beschickens erhalten bleiben, weist die Zuführeinrichtung 30, welche an der Einlassöffnung 11 des Reaktors 10 angeordnet ist, zumindest zwei Verschlussvorrichtungen 32, 33 auf.

Im Übrigen ist die Zuführeinrichtung 30 im Wesentlichen rohrförmig ausgestaltet, wobei in dem in Fig. 1 gezeigten Ausführungsbeispiel der Durchmesser der Zuführeinrichtung kleiner ist als der Durchmesser des Reaktors 10.

In einer weiteren Ausführungsform der Erfindung kann der Durchmesser der Zuführeinrichtung 30 im Wesentlichen dem Durchmesser des Reaktors 10 entsprechen. Dies hat den Vorteil, dass der Reaktor 10 ab der einlassseitigen Verschlussvorrichtung 32 bzw. hinter der einlassseitigen Verschlussvorrichtung 32 keine Kanten bzw. Ecken aufweist, in denen sich die in den Reaktor 10 eingebrachte Biomasse absetzen und so zu Verschmutzungen des Reaktors 10 führen könnte.

Die Zuführeinrichtung 30 weist einen Zufluss 31 auf, über den die in den Reaktor einzubringende Biomasse der Zuführeinrichtung 30 zugeführt wird. An diesem Zufluss 31 ist eine Verschlussvorrichtung 33 vorgesehen, welche sich zum Zweck der Einbringung von Biomasse in die Zuführeinrichtung 30 öffnen lässt.

Besonders vorteilhaft ist es, die Verschlussvorrichtung 33 besonders nahe an der Wandung der Zuführeinrichtung 30 vorzusehen, so dass möglichst die gesamte in die Zuführeinrichtung 30 eingebrachte Biomasse mit der in der Zuführeinrichtung 30 angeordneten Einbringvorrichtung 34 in den Reaktor 10 einbringbar ist. Die Einbringvorrichtung 34 kann in einer Ausführungsform als Kolbenpumpe ausgestaltet sein.

### Die Funktionsweise der Zuführeinrichtung 30 ist dabei im Wesentlichen folgende:

Die Verschlussvorrichtung 32 befindet sich in einer geschlossenen Stellung. Zunächst wird die Verschlussvorrichtung 33 geöffnet, so dass die im Zufluss 31 vorhandene Biomasse in die Zuführeinrichtung 30 eingegeben werden kann. Nachdem die Biomasse in die Zuführeinrichtung 30 gegeben wurde, wird die Verschlussvorrichtung 33 vorzugsweise druckdicht verschlossen. Zu diesem Zeitpunkt befindet sich auch die Verschlussvorrichtung 32 noch im geschlossenen Zustand.

Als nächstes wird die Verschlussvorrichtung 32 geöffnet, und die sich in der Zuführeinrichtung 30 befindliche Biomasse wird von der Kolbenpumpe 34 gegen den Reaktordruck durch die Einlassöffnung 11 vorzugsweise vollständig in den Reaktor eingebracht. Da die Biomasse eine pastöse mit Wasser versetzte Masse ist, ist gewährleistet, dass zum Zeitpunkt des Öffnens der Verschlussvorrichtung 32 der Innendruck des Reaktors im Wesentlichen erhalten bleibt, da der im Innern des Reaktors vorhandene Druck nicht ausreicht, um die Biomasse in der Zuführeinrichtung 30 so weit zu komprimieren, dass der Druck im Reaktor unterhalb eines bestimmten Werts sinkt. Zusätzlich ist auch gewährleistet, dass die Innentemperatur des Reaktors nicht wesentlich absinkt. Der im Reaktor ablaufende Prozess wird somit durch das Öffnen der Verschlussvorrichtung 32 nicht beeinflusst bzw. unterbrochen, sodass eine kontinuierliche bzw. quasi-kontinuierliche Beschickung des Reaktors mit Biomasse möglich ist.

Um die durch das Öffnen der Verschlussvorrichtung 32 bedingten sehr leichten Druckschwankungen im Reaktor 10 möglichst weitgehend zu vermeiden, ist es vorteilhaft, die Verschlussvorrichtung 32 erst dann zu öffnen, sobald mit Hilfe der Kolbenpumpe 34 die in der Zuführeinrichtung 30 befindliche Biomasse soweit komprimiert wurde, dass der Druck in der Zuführeinrichtung 30 im Wesentlichen dem Innendruck des Reaktors 10 entspricht.

Zu diesem Zweck kann eine Sensoreinrichtung 61 vorgesehen werden, welche den Innendruck der Zuführeinrichtung 30 mit dem Innendruck des Reaktors 10 vergleicht. Die Sensoreinrichtung kann gleichzeitig etwa mit einem Stellmotor gekoppelt sein, welcher dafür vorgesehen ist, die Verschlussvorrichtung 32 zu öffnen bzw. zu schließen. Die Sensoreinrichtung 61 kann so ausgestaltet sein, dass ein Öffnen der Verschlussvorrichtung 32 durch den Stellmotor nur möglich ist, wenn sich die Druckdifferenz zwischen Innendruck der Zuführeinrichtung 30 und dem Innendruck des Reaktors 10 unterhalb eines bestimmten Werts (wenn die Druckdifferenz beispielsweise kleiner als 2 bar oder kleiner als 1 bar ist) befindet.

Alternativ oder zusätzlich kann die Sensoreinrichtung 61 auch dafür vorgesehen werden, beispielsweise einen Schrittmotor, mit welchem die Verschlussvorrichtung 33 geöffnet bzw. geschlossen wird, zu steuern. Das Öffnen der Verschlussvorrichtung 33 kann in einer Ausführungsform etwa nur dann erfolgen, wenn der Innendruck der Zuführeinrichtung 30 unterhalb eines bestimmten Werts liegt. Damit wird ein sicheres Öffnen der Verschlussvorrichtung 33 gewährleistet, ohne dass beim Öffnen ein explosionsartiger Druckabfall stattfindet, was zu Beschädigungen an der gesamten Reaktorvorrichtung bzw. der Reaktorumgebung führen kann.

Aus Sicherheitsgründen kann am Zufluss 31 der Verschlussvorrichtung 33 ein Sicherheitsverschluss 35 vorgesehen werden, welcher nur öffenbar ist, wenn sich die Verschlussvorrichtung 33 im geschlossenen Zustand befindet. Darüber hinaus kann der Sicherheitsverschluss 35 auch dazu verwendet werden, Biomasse in vorgegebenen Chargen der Zuführeinrichtung 30 zuzuführen.

Anzumerken ist insbesondere, dass sowohl die Verschlussvorrichtung 32 als auch die Verschlussvorrichtung 33 ein druckdichtes Abschließen der Zuführeinrichtung 30 ermöglichen, so dass vom Reaktor über die Einlassöffnung 11 kein Druck entweichen kann.

Ein oberer Bereich des Zuflusses 31 ist vorzugsweise trichterförmig ausgestaltet. Über den Trichter wird Biomasse dem Zufluss 31 zugeführt. Der im Trichter bzw. im Zufluss 31 befindlichen Biomasse kann bei Bedarf zusätzlich Wasser hinzu gegeben werden, so dass die dem Reaktor 10 zuzuführende Biomasse vorzugsweise einen Wasseranteil von etwa 30 % aufweist. Zusätzlich kann der Biomasse auch ein Katalysator, vorzugsweise Zitronensäure zugesetzt werden, um den Prozess der hydrothermalen Karbonisierung im Reaktor zu beeinflussen, z.B. zu beschleunigen oder zu verzögern.

Die im Trichter eingefüllte Biomasse kann dabei mit Hilfe eines Rührwerks 40 verrührt bzw. vermischt werden, so dass eine besonders homogene Biomassemischung entsteht, da die Homogenität der dem Reaktor zugeführten Biomasse Einfluss auf die Qualität des durch die hydrothermale Karbonisierung erzeugten Endprodukts bzw. Zwischenprodukts hat.

Besonders vorteilhaft ist es, vor dem Rührwerk 40 oder alternativ zum Rührwerk eine Zerkleinerungseinrichtung (in Fig. 1 nicht gezeigt) anzuordnen, durch welche die einzuführende Biomasse in im Wesentlichen gleich große Partikel zerkleinert werden kann, sollte die zu verarbeitende Biomasse ein stark heterogenes Gemisch sein. Die Zerkleinerungseinrichtung kann etwa eine Hammermühle umfassen. Die Zerkleinerung der zuzuführenden Biomasse hat insbesondere auch den Vorteil, dass die Biomasse besonders gleichmäßig karbonisiert werden kann.

Eine weitere Ausführungsform der Erfindung kann auch vorsehen, dass dem Rührwerk 40 beispielsweise eine Förderschnecke nachgeschaltet ist, welche sich in den Bereich des Zuflusses 31 erstreckt und im Wesentlichen den Durchmesser des Zuflusses 31 aufweist. Dadurch kann eine gezielte und steuerbare Zuführung von Biomasse in die Zuführeinrichtung 30 erreicht werden. Zusätzlich kann die Biomasse schon während des Zuführens in die Zuführeinrichtung 30 unter einen bestimmten Druck gesetzt werden, so dass in einer besonderen Ausgestaltung der Erfindung mit Hilfe der Kolbenpumpe 34 kein zusätzlicher Druckaufbau mehr erfolgen muss, bevor die Biomasse in den Reaktor eingebracht wird.

Die Förderschnecke kann in einer Ausgestaltung mit dem Rührwerk gekoppelt sein. So kann die Förderschnecke und das Rührwerk beispielsweise mit derselben Antriebseinheit angetrieben werden.

Der Betrieb der Kolbenpumpe 34, der Verschlussvorrichtungen 32, 33 sowie des Sicherheitsverschlusses 35 ist so aufeinander abgestimmt, dass ein sicheres Einbringen von Biomasse in den Reaktor 10 ermöglicht wird, während der Innendruck bzw. die Innentemperatur des Reaktors 10 im Wesentlichen konstant bleiben. Dazu kann eine Mess- und Steuereinrichtung bzw. Regeleinrichtung vorgesehen sein, welche auch im Zusammenhang mit dem vom Drucksensor 61 ermittelten Daten eine Steuerung bzw. Regelung der Komponenten 34, 32, 33 und 35 bewerkstelligt.

Die Frequenz bzw. die Taktung, mit welcher Biomasse in den Reaktor 10 eingebracht wird, hängt im Wesentlichen von der Länge des Reaktors 10 ab. Da eine größere Länge des Reaktors eine höhere Strömungsgeschwindigkeit der durch den Reaktor 10 bewegten Biomasse erfordert, muss Biomasse auch mit einer größeren Taktung dem Reaktor zugeführt werden. Gemäß der vorliegenden Erfindung ist der Durchmesser des Reaktors klein im Verhältnis zur Länge des Reaktors. Gemäß dem erfindungsgemäßen Konzept ist es möglich, Reaktoren für die hydrothermale Karbonisierung von Biomasse von beispielsweise 50 m bis 100 m oder mehr bereitzustellen. Der Durchmesser des Reaktorrohres 10 kann hierbei weniger als 1 m aber auch mehr als 1 m betragen. Das Verhältnis von Reaktorrohrdurchmesser zu Reaktorrohrlänge liegt vorzugsweise zwischen 1:10 und 1:200. Das Verhältnis kann aber auch größer oder kleiner sein.

Im eingangsseitigen Bereich des Reaktors 10 ist eine Heizeinrichtung 21 angeordnet, welche dazu vorgesehen ist, die in den Reaktor eingeführte Biomasse auf eine Temperatur von etwa 160°C bis 210°C, vorzugsweise 180°C zu erwärmen. Die Heizeinrichtung 21 kann als ein um den Reaktor umlaufender Heizmantel zur Aufnahme eines Thermofluids ausgestaltet sein, wobei der Heizmantel eine Öffnung zum Zuführen des Thermofluids sowie eine Öffnung zum Abführen des Thermofluids aufweist. Beim Hochfahren des Reaktors, d.h. beim erstmaligen Einführen von Biomasse in den Reaktor, wird das der Heizeinrichtung 21 zugeführte Thermofluid von einer externen Heizeinrichtung erwärmt. Ist der Reaktor 10 zu einem bestimmten Teil bereits mit Biomasse aufgefüllt und befindet sich der Karbonisierungsprozess bereits in der zweiten Phase, kann die von der zweiten Phase erzeugte Wärmeenergie dazu verwendet werden, das Thermofluid, welches durch die Heizeinrichtung 21 fließt, zu erwärmen.

Ein weiterer Teil des Reaktors ist mit mindestens einer Heiz-/Kühleinrichtung 22 ausgestaltet, um die durch den Karbonisierungsprozess frei gewordene Wärmeenergie vom Reaktorrohr abzuführen. Die Heiz-/Kühleinrichtung 22 kann dabei ebenfalls als ein um das Reaktorrohr verlaufender Heiz-/Kühlmantel ausgeführt sein. Die Heiz-/Kühleinrichtung übernimmt in erster Linie die Funktion einer Kühleinrichtung, da in der zweiten bzw. dritten Phase des hydrothermale Karbonisierungsprozesses, welcher ja exotherm abläuft, Wärmeenergie abgegeben wird. Die Heiz-/Kühleinrichtung 22 kann bei Bedarf aber auch zum Aufheizen verwendet werden, sollte die Innentemperatur des Reaktors unter die für den Karbonisierungsprozess notwendige Temperatur fallen. Die Heiz-/Kühleinrichtung 22 weist ebenfalls eine Öffnung zum Zuführen eines Thermofluids, sowie eine Öffnung zum Abführen des aufgeheizten Thermofluids auf.

Das erhitzte Thermofluid kann in einer Ausgestaltung der Erfindung der Heizeinrichtung 21 zugeführt werden, so dass das der Heizeinrichtung 21 zugeführte Thermofluid nicht mehr extern erhitzt werden muss. Zusätzlich kann ein Teil des von der Kühleinrichtung 22 abgeführten Thermofluids beispielsweise einem Wärmetauscher 50 zugeführt werden. Reicht die Wärmeenergie des von der Kühleinrichtung 22 abgeführten Thermofluids nicht aus, um den ersten Teil des Reaktors, an dem sich die Heizeinrichtung 21 befindet, auf eine bestimmte Temperatur aufzuheizen, so kann dem von der Kühleinrichtung 22 abgeführten Thermofluid zusätzlich von einer externen Heizeinrichtung aufgeheiztes Thermofluid beigemengt werden. Zu diesem Zweck ist es vorteilhaft, die Temperatur des von der Kühleinrichtung abgeführten Thermofluids, vorzugsweise regelmäßig zu überprüfen, so dass bei Bedarf zusätzlich aufgeheiztes Thermofluid für die Heizeinrichtung 21 zugegeben werden kann. Das Bestimmen der Temperatur kann beispielsweise von einer Temperatursensoranordnung im Bereich des Abflusses der Kühleinrichtung 22 oder im Bereich des Zuflusses der Heizeinrichtung 21 vorgenommen werden.

Bevorzugt sind im Reaktorinneren eine Anzahl von Temperatursensoreinrichtungen vorgesehen, um die Innentemperatur des Reaktors zu überwachen bzw. die Temperatur des der Heizeinrichtung 21 zugeführten Thermofluids bzw. die Temperatur des der Kühleinrichtung 22 zugeführten Thermofluids zu steuern.

In einer anderen Ausführungsform der Heizeinrichtung 21 bzw. der Kühleinrichtung 22 kann die Temperatur des Reaktorinneren auch indirekt über die Durchflussgeschwindigkeit des Thermofluids durch die Heizeinrichtung 21 bzw. die Kühleinrichtung 22 sowie der Temperaturdifferenz des Thermofluids zwischen Eingang und Ausgang der Heizeinrichtung 21 bzw. zwischen Eingang und Ausgang der Kühleinrichtung 22 bestimmt werden. Dies hat den Vorteil, dass im Innern des Reaktors 10 keine zusätzlichen Einrichtungen vorgesehen werden müssen, welche zu unnötigen Verschmutzungen bzw. Ablagerungen an der Reaktorinnenwand führen können.

Das von der Heizeinrichtung 21 abgeführte Thermofluid kann, sofern es nicht über einer bestimmten Temperatur liegt, der Kühleinrichtung 22 zugeführt werden.

Am Ende des Reaktorrohrs 10 ist an der Auslassöffnung 12 eine Entnahmeeinrichtung 13 vorgesehen. Bei einer Ausführungsform der Erfindung umfasst die Entnahmeeinrichtung 13 im Wesentlichen ein Entnahmerohr sowie zwei hintereinander angeordnete Verschlussvorrichtungen 80, 81. Die Auslassöffnung 12 weist dabei im Wesentlichen den gleichen Durchmesser wie die Einlassöffnung 11 am Anfang des Reaktors auf.

Besonders vorteilhaft ist es, wenn der Querschnitt der Auslassöffnung 12 im Wesentlichen dem Querschnitt des Reaktorrohrs 10 entspricht, so dass ein widerstandsfreies Ausbringen der Endprodukte aus dem Reaktor gewährleistet ist.

Die Funktionsweise der Entnahmeeinrichtung bzw. der hintereinander angeordneten Verschlussvorrichtungen 80, 81 ist dabei im Wesentlichen folgende:
Um ein Endprodukt dem Reaktor zu entnehmen, wird zunächst die Verschlussvorrichtung 80 geöffnet, während die Verschlussvorrichtung 81 geschlossen ist. Durch den im Reaktor 10 herrschenden Druck wird das Endprodukt in dem Rohrbereich zwischen der Verschlussvorrichtung 80 und der Verschlussvorrichtung 81 befördert. Anschließend wird die Verschlussvorrichtung 80 geschlossen und die Verschlussvorrichtung 81 wird geöffnet. Das im Rohrbereich zwischen den Verschlussvorrichtungen 80 und 81 ausgetragene Endprodukt wird dabei größtenteils aufgrund des noch vorhandenen Überdrucks nach außen transportiert. Zur vollständigen Entnahme des Endprodukts aus dem Rohrbereich zwischen der Verschlussvorrichtung 80 bzw. 81 können zusätzliche Entnahmevorrichtungen vorgesehen werden. Der Öffnungs- bzw. Schließvorgang der Verschlussvorrichtung 80 erfolgt dabei vorzugsweise synchron mit dem Öffnungs- bzw. Schließvorgang der einlassseitigen Verschlussvorrichtung 32. Zu diesem Zweck kann die Antriebseinheit, welche für das Öffnen bzw. Schließen der Verschlussvorrichtung 80 vorgesehen ist, von der gleichen Steuereinrichtung gesteuert werden, welche die Antriebseinheit zum Öffnen bzw. zum Schließen der Verschlussvorrichtung 32 vorgesehen ist.
Da die Verschlussvorrichtung 32 und die Verschlussvorrichtung 80 im Wesentlichen synchron geöffnet bzw. geschlossen werden, befindet sich im Regelfall immer dieselbe Menge an Biomasse im Reaktorrohr.
Im unteren Bereich der Fig. 1 ist eine alternative Ausführungsform des Reaktorrohrs im Bereich der Einlassöffnung 11 bzw. im Bereich der Auslassöffnung 12 dargestellt. Diese Ausführungsform hat den Vorteil, dass keine rechtwinkeligen Kanten vorhanden sind, so dass Ablagerungen in diesen Bereichen effizient entgegengewirkt werden kann.
Selbstverständlich sind noch weitere Ausgestaltungen des Reaktors 10 im Bereich der Einlassöffnung 11 bzw. der Auslassöffnung 12 denkbar. Wie bereits oben beschrieben, kann der Querschnitt der Einlassöffnung 11 und/oder der Querschnitt der Auslassöffnung 12 im Wesentlichen dem Querschnitt des Reaktorrohrs entsprechen.

Zusätzlich kann an dem Reaktor an einer oder mehreren Stellen auch ein Überdruckventil angeordnet sein, durch welche bei Übersteigen eines vorgegebenen Reaktorinnendrucks der Druck nach Außen abgelassen werden kann.

**Fig. 2** zeigt eine schematische Darstellung eines hydrothermalen Reaktors, aus mehreren Reaktorsegmenten 10a, 10b, 10c und 10d. Selbstverständlich können auch mehrere Reaktorsegmente als die vier in Fig. 2 gezeigten Reaktorsegmente vorgesehen werden, um einen hydrothermalen Reaktor aufzubauen. Eine mögliche Variante eines Aufbaus eines Reaktors mit mehreren Segmenten ist beispielsweise in Fig. 4 gezeigt.

Jedem Reaktorsegment ist hierbei eine Heiz-/Kühleinrichtung angeordnet, welche im Wesentlichen so aufgebaut sein kann, wie sie bereits im Zusammenhang mit Fig. 1 beschrieben wurde. Vorteilhaft ist es, das erste Reaktorsegment 10a mit einer Heizeinrichtung 21 und das letzte Reaktorsegment 10d mit einer Kühleinrichtung 22 auszustatten, während die dazwischen liegenden Segmente 10b und 10c mit einer Heiz-/Kühleinrichtung ausgestattet sind. Mit diesem Aufbau wird das Reaktorrohr bzw. die sich im Reaktorrohr befindliche Biomasse im ersten Segment beheizt und im letzten Segment abgekühlt. Den Heiz-/Kühleinrichtungen der Reaktorsegmente 10b und 10c können bei Bedarf mittels des durch die Heiz/Kühleinrichtungen fließenden Thermofluids Wärme zugeführt oder Wärme abgeführt werden. Dadurch wird gewährleistet, dass den einzelnen Reaktorsegmenten entsprechend dem gewünschten Karbonisierungsprozess Wärmeenergie zugeführt bzw. Wärmeenergie abgeführt werden kann.

Anhand der vier Segmente 10a bis 10d wird nachfolgend der Karbonisierungsprozess beschrieben:

In einer ersten Phase, der Monomer-Phase, welche im ersten Reaktorsegment 10a abläuft, werden lösliche Polysacharide im Wesentlichen hydrolisiert und von den Zuckergundkörpern drei Wassermoleküle abgespalten. Es entstehen Öle, wie etwa das Hydroxymethylfurfural (HMF). In dieser Prozessstufe muss Energie zum Aufheizen der Biomasse zugeführt werden. Daher ist im ersten Reaktorsegment 10a eine Heizeinrichtung 21 angeordnet. In dieser Phase wird Biomasse auf etwa 180°C erwärmt. Die dem Reaktor zugeführte Biomasse befindet sich zwischen ca. 30 bis 60 Minuten in dieser Phase bzw. im Reaktorsegment 10a.

In einer zweiten Phase, der Polymer-Phase, werden die entstandenen Öle zu einer Art Vorkohle bzw. Harz polymerisiert. Dabei wird die wesentliche Energie des Prozesses frei, wobei es teilweise zu Temperatur- und Druck-Peaks kommen kann. In dieser Phase ist Prozesskontrolle der wichtigste Punkt, so dass insbesondere im Bereich des Reaktorsegments 10b Temperatur und Druck des Reaktors überwacht werden müssen. Verlässt die Reaktion in dieser zweiten Phase das stabile Temperaturfenster von ca. 180°C bis 210°C, kann es in einer Nebenreaktion zu einer CO₂-Abspaltung kommen, welche den Druck im Reaktor nochmals erhöht. Um den Prozess in dieser Phase in dem stabilen Temperaturfenster zuhalten, ist das zweite Reaktorsegment 10b mit einer Heiz-/Kühleinrichtung ausgestattet, so dass das Reaktorsegment 10b bei Bedarf beheizt bzw. abgekühlt werden kann. Für die zweite Phase kann eine Prozesszeit zwischen ca. 1 Stunde und 6 Stunden vorgesehen werden. Die Länge des Reaktorsegments 10b wird dabei entsprechend der Prozesszeit gewählt. Je länger die Prozesszeit gewählt wird, umso länger muss auch das Reaktorsegment 10b sein, falls die Durchflussgeschwindigkeit gleich bleiben soll.

In einer dritten Phase, der Reifungsphase, welche zwischen 2 bis 12 Stunden dauern kann und bei ca. 200°C abläuft, kondensiert die Kohle "aus", und das restliche Wasser wird vom Kohlekörper abgespalten. In dieser Phase kann die Temperatur auch höher sein. Die wesentlichen Kohlestoff-Verknüpfungen sind in dieser Phase bereits gelegt; die Reaktion kann weder energetisch noch strukturell weglaufen. In dieser dritten Phase bzw. im dritten Reaktorsegment 10c klingt die Wärmeproduktion langsam auf Null ab. In dieser Phase kann zur Einstellung spezieller Effekte der pH-Wert geändert werden oder für besondere Produktanwendungen Zuschlagstoffe beigemischt werden. Zu diesem Zweck kann das Reaktorsegment 10c Zuführeinrichtungen bzw. Zuführöffnungen aufweisen, um solche Zuschlagstoffe dem Zwischenprodukt in dieser dritten Phase beizumengen.

In einer vierten Phase, der Abkühlphase, welche im Reaktorsegment 10d abläuft, wird der verarbeiteten Biomasse Wärme entzogen, um das Produkt mäßig warm und unter minimalem Druckausgleich leicht ausschleusbar zu machen. Die Temperatur im Innern des Reaktorsegments 10d beträgt in dieser Phase ca. 180°C bis 50°C. Die Prozessphase kann ca. 2 Stunden betragen. Beim Abkühlen werden auf der Oberfläche der Kohle auch spezielle, bei hohen Temperaturen entstehende Bindungen wieder gelöst (z.B. Aldimine mit Aminosäuren). Auch in dieser Phase können der verarbeiteten Biomasse spezielle Zuschlagstoffe beigemengt werden, welche etwa die Textur für ein besseres Abtrennen der Wasserphase einstellt. Da in dieser vierten Phase lediglich ein Abkühlen der verarbeiteten Biomasse erfolgt, ist es ausreichend, lediglich eine Kühleinrichtung 22 vorzusehen, welche Wärmeenergie vom Reaktorsegment 10d abführt.

Durch das gezielte Abkühlen der Biomasse in der vierten Phase bzw. in dem vierten Reaktorabschnitt wird der Biomasse gezielt Wärme entzogen, welche zur anderweitigen Nutzung, etwa zum Aufheizen in der ersten Phase verwendet werden kann. Ein gezieltes Abkühlen der Biomasse in dem vierten Reaktorabschnitt hat zudem den Vorteil, dass ein unkontrollierter Dampfaustritt aus dem Reaktorrohr während eines Entnahmevorganges von Biomasse aus dem Reaktorrohr weitestgehend vermieden wird, sodass der Energieverlust aufgrund der im austretenden Dampf enthaltenen Wärmeenergie minimiert wird. Dadurch kann auch der gesamte Wirkungsgrad des Reaktors deutlich verbessert werden.

Am Ende des Reaktorsegments 10d kann die Innentemperatur des Reaktors und somit auch die Temperatur des auszutragenden Endproduktes noch mal drastisch abgesenkt werden, sodass das ausgetragene Endprodukt nicht zusätzlich abgekühlt werden muss und somit direkt einer weiteren Verarbeitung zugeführt werden kann. Ein solches drastisches Abkühlen des letzten Teiles des Reaktorsegmentes 10d hat aufgrund der großen Reaktorlänge im Vergleich zum Reaktordurchmesser keine Auswirkungen auf die Reaktorinnentemperatur der den Prozessphasen zwei und drei zugeordneten Reaktorsegmente 10b und 10c.

Die von den Reaktorsegmenten 10b, 10c und 10d abgeführte Wärmeenergie kann der Heizeinrichtung 21 zugeführt werden. Ebenfalls ist es denkbar, die abgeführte Wärmeenergie dieser drei Reaktorsegmente, wie bereits in Fig. 1 dargestellt, einem oder mehreren Wärmetauschern 50 zuzuführen. Die Wärmeenergie kann aber auch genutzt werden, um das vom Reaktor entnommene Endprodukt, welches noch eine bestimmte Menge an Wasser enthält, zu trocknen.

In einer besonderen Ausführungsform sind einzelne Reaktorsegmente um ihre Längsachse 15 drehbar ausgestaltet. Durch die drehbare Ausgestaltung einzelner Reaktorsegmente kann die Reaktion der Biomasse dahingehend unterstützt werden, dass sie gleichmäßiger verläuft. Des Weiteren kann dadurch ein Anhaften von Biomasse an der Reaktorinnenwand noch weiter verringert werden. Bei einem drehbar ausgestalteten Reaktorsegment ist natürlich sicherzustellen, dass der Mantel der Heiz-/Kühleinrichtung gegenüber dem Reaktorrohr des Reaktorsegments wasserdicht ausgestaltet ist, damit das die Heiz-/Kühleinrichtung durchströmende Thermofluid nicht entweichen kann.

Zusätzlich können an der Innenwandung des drehbar ausgestalteten Reaktorrohrs ein oder mehrere Leitbleche 25 vorgesehen werden, um bei einem sich drehenden Reaktorsegment ein Durchmischen der Biomasse zu unterstützen.

In Fig. 2 ist zwischen dem Reaktorsegment 10b und Reaktorsegment 10c eine Fördereinrichtung 90, welche in einer Ausführungsform als Pumpenmittel ausgestaltet sein kann, gezeigt. Dies ist etwa dann vorteilhaft, wenn das Reaktorrohr 10 eine besonders große Länge, etwa mehr als 100 m aufweist. Damit kann der Vorschub der Biomasse in dem Reaktorrohr unterstützt werden.

Besonders vorteilhaft ist es, wenn die einzelnen Reaktorsegmente trennbar voneinander ausgestaltet sind, dass diese getrennt voneinander transportierbar und lagerbar sind. Die Anschlussstellen der Reaktorsegmente sind so ausgestaltet, dass ein druckdichter Zusammenbaus möglich ist. Eine Fördereinrichtung in den einzelnen Reaktorsegmenten ist nicht notwendig, da die Vorschubskraft der Kolbenpumpe 34 bzw. der Pumpe 90 ausreicht, die Biomasse durch das Reaktorrohr zu befördern. Die zusammengebauten bzw. verbundenen Reaktorsegmente bilden ein durchgängiges Reaktorrohr bzw. eine Reaktorröhre mit vier Reaktorabschnitten, wobei der vierte Reaktorabschnitt zum Abkühlen der Biomasse vorgesehen ist.

**Fig. 3a** zeigt eine vergrößerte Darstellung eines Reaktorsegments mit einer zusätzlichen Auslassöffnung zur Entnahme von Zwischenprodukten. In dem in Fig. 3a gezeigten Reaktorsegment ist die Auslassöffnung 70 zur Entnahme von Zwischenprodukten im Endbereich des Reaktorsegments angeordnet. Die Auslassöffnung 70 kann aber auch in jedem anderen Bereich des Reaktorsegments vorgesehen werden. Vorteilhaft ist es, die Auslassöffnung 70 im unteren Bereich eines horizontal verlaufenden Reaktorrohrs vorzusehen, so dass das zu entnehmende Zwischenprodukt durch den Reaktor-Innendruck, unterstützt durch die Schwerkraft, auf einfache Art und Weise entnommen werden kann. Auch bei der Entnahme von Zwischenprodukten muss, wie bei der Entnahme von Endprodukten am Ende des Reaktorrohrs, der Innendruck bzw. die Innentemperatur des Reaktors im Wesentlichen erhalten bleiben. Dazu ist die Auslassöffnung 70 im Wesentlichen rohrförmig ausgestaltet. Die rohrförmige Auslassöffnung 70 kann dabei zwei hintereinander angeordnete Verschlussvorrichtungen 71 und 72 aufweisen, welche alternierend öffenbar sind.

Die Entnahme von Zwischenprodukten erfolgt dabei folgendermaßen:
Zunächst befinden sich beide Verschlussvorrichtung 71, 72 im geschlossenen Zustand. Als erstes wird die Verschlussvorrichtung 72 geöffnet. Das in dem Bereich der Auslassöffnung 70 vorhandene Zwischenprodukt wird durch den Innendruck des Reaktors unter Unterstützung der Schwerkraft in den Bereich zwischen der Verschlussvorrichtung 71 und der Verschlussvorrichtung 72 befördert. Anschließend wird die Verschlussvorrichtung 72 geschlossen und nachdem die Verschlussvorrichtung 72 geschlossen ist, wird die Verschlussvorrichtung 71 zur Entnahme des Zwischenprodukts aus der rohrförmigen Auslassöffnung 70 geöffnet. Dabei ist zumindest die Verschlussvorrichtung 72 so ausgestaltet, dass ein druckdichtes Verschließen der Verschlussvorrichtung möglich ist.

Um die Entnahme von Zwischenprodukten zu unterstützen, kann direkt hinter der Auslassöffnung 70 im Reaktorrohr eine Schleuseneinrichtung 73 vorgesehen werden. Durch diese Schleuseneinrichtung 73 wird gewährleistet, dass nur Zwischenprodukte aus einer Richtung kommend entnommen werden. Die Schleuseneinrichtung 73 kann dabei senkrecht zur Längsachse 15 des Reaktorrohrs angeordnet werden. Um die Entnahme von Zwischenprodukten noch weiter zu unterstützen, und um Ablagerungen im Bereich der Schleuseneinrichtung 73 möglichst gering zu halten, kann die Schleuseneinrichtung 73 im Wesentlichen in einem bestimmten Winkel zur Längsachse des Reaktorrohrs angeordnet werden. Die Schleuseneinrichtung 73 wird vor dem Entnahmevorgang, d.h. vor dem Öffnen der Verschlussvorrichtung 72, geschlossen. Nachdem die Verschlussvorrichtung 72 wieder geschlossen wurde, kann die Schleuseneinrichtung 73 wieder geöffnet werden.

Die Koordination des Öffnen- und Schließvorgangs der Schleuseneinrichtung 73, sowie der Verschlussvorrichtungen 71 und 72 wird vorteilhafterweise von einer Steuereinrichtung übernommen. Die Steuereinrichtung kann hierbei dieselbe Steuereinrichtung sein, welche die Steuerung der Schließvorgänge der Verschlussvorrichtungen 32, 33 sowie der Verschlussvorrichtungen 80, 81 übernimmt. Vorteilhafterweise ist die Verschlussvorrichtung 72 synchron mit der Verschlussvorrichtung 32 öffenbar bzw. schließbar, so dass bei der Entnahme von Zwischenprodukten gleichzeitig neue Biomasse dem hydrothermalen Druckreaktor zugeführt wird.

**Fig. 3b** zeigt eine alternative Ausführungsform eines Reaktorsegments, welches ausgebildet ist, um Zwischenprodukte dem Reaktor zu entnehmen. Wie in Fig. 3a weist das Reaktorsegment eine Auslassöffnung 70 mit zwei an der Auslassöffnung 70 angeordneten Verschlussvorrichtungen 71 und 72 auf. Gegenüber der Auslassöffnung 70 kann eine Kolbenpumpe 75 vorgesehen sein, welche bei geöffneter Verschlussvorrichtung 72 in den Reaktor-Innenraum eingeführt wird, um so das Ausbringen von Zwischenprodukten aus dem Reaktor zu unterstützen. Wichtig ist hierbei, dass die Kolbenpumpe so ausgestaltet ist, bzw. so arbeitet, dass nicht der gesamte Kolben in den Reaktor-Innenraum gelangt, um ein Entweichen des Reaktor-Innendrucks bzw. der Reaktor-Innentemperatur zu verhindern. Auch in dieser Ausgestaltung kann eine Schleuseneinrichtung 73 vorgesehen werden, um zum Zeitpunkt des Öffnens der Verschlussvorrichtung 72 zu vermeiden, dass Zwischenprodukte, welche die Auslassöffnung 70 bereits passiert haben, aufgrund des im Reaktor herrschenden Überdrucks wieder zurück in die Auslassöffnung 70 bewegt werden.

**Fig. 4** zeigt eine Ausführungsform eines rohrförmigen hydrothermalen Druckreaktors aus einer Anzahl von Reaktorsegmenten, wobei für jede Phase des Karbonisierungsprozesses eine unterschiedliche Anzahl von Reaktorsegmenten vorgesehen ist. Da, wie bereits im Zusammenhang mit Fig. 2 beschrieben, die einzelnen Phasen eines Karbonisierungsprozesses unterschiedlich lang sind, können die einzelnen Phasen des Karbonisierungsprozesses durch eine jeweils unterschiedliche Anzahl von Reaktorsegmenten gebildet werden.

Wie in Fig. 4 ersichtlich ist, wird die erste Phase P1 von zwei Reaktorsegmenten gebildet, die zweite Phase P2 von sechs Reaktorsegmenten, die dritte Phase P3 von acht Reaktorsegmenten und die vierte Phase P4 von fünf Reaktorsegmenten.

Der Ausgang des letzten Reaktorsegments einer Phase kann mit dem Eingang des ersten Reaktorsegments der nachfolgenden Phase mit einer Fördereinrichtung, welche beispielsweise eine Pumpe sein kann, verbunden werden. Durch eine Pumpeinrichtung ist es beispielsweise auch möglich, die einzelnen Phasen des Karbonisierungsprozesses mechanisch so voneinander zu entkoppeln, dass sich Drücke und Temperaturen zweier aufeinander folgenden Phasen nicht gegenseitig beeinflussen. Damit ist der gesamte Karbonisierungsprozess noch besser steuerbar.

Aufgrund der modularen Bauweise des gesamten hydrothermalen Reaktors können bei Bedarf jeder Phase zusätzliche Reaktorsegmente hinzugefügt bzw. entfernt werden. Die Länge eines Reaktorabschnitts einer Phase hängt auch von der Zusammensetzung der Biomasse als Edukt ab. So könnten für eine bestimmte Art von Biomasse, etwa für die Phase P2, anstelle von sechs Reaktorsegmenten lediglich vier Reaktorsegmente notwendig sein. Zusätzlich zu den in Fig. 4 gezeigten Pumpeneinrichtungen 90 können auch einzelne Reaktorsegmente innerhalb einer Phase mit einer Pumpeneinrichtung miteinander gekoppelt werden. Dies ist insbesondere dann von Vorteil, wenn ein Reaktorabschnitt einer Phase eine besonders große Länge aufweist.

Wie in Fig. 4 ersichtlich, sind Reaktorsegmente der Phase P1 mit einer Heizeinrichtung 21 ausgestattet; die Reaktorsegmente der Phase P4 mit einer Kühleinrichtung 22; die Reaktorsegmente der Phase P3 mit einer Kühleinrichtung 22 sowie die Reaktorsegmente der Phase P2 mit einer Heiz-/Kühleinrichtung 21, 22 ausgestattet.

Die Kühleinrichtungen 22 an den Reaktorsegmenten der Phase P4 tragen wesentlich zur Verbesserung des Wirkungsgrades des Reaktors bei, da die dem Reaktionsprodukt in der Phase P4 entzogene Wärmeenergie etwa zum Aufheizen der Biomasse in der Phase P1 genutzt werden kann. Zudem ist die Entnahme von Reaktionsprodukten nach der Abkühlphase einfacher bewerkstelligbar. Des Weiteren wird bei einer Entnahme von Reaktionsprodukten nach der Abkühlphase ein unkontrolliertes Austreten von Dampf vermieden, was zu einem Verlust an Wärmeenergie führen würde.

Aufgrund der physikalischen Trennung der einzelnen Phasen mit dem Pumpenmittel 90 ist es möglich, die Reaktorabschnitte bzw. die einzelnen Phasen unabhängig voneinander und gezielt zu steuern bzw. zu regeln.

Auch in dieser Ausgestaltung ist es vorteilhaft, die den Phasen P2 bis P4 entnommene Wärmeenergie der Heizeinrichtung 21 der Phase P1 zuzuführen.

Der in Fig. 4 gezeigte hydrothermale Reaktor ist im Wesentlichen schlangenförmig aufgebaut.

Auch ist durch eine schlangenförmige Anordnung des gesamten Reaktorrohrs ein besonders Platz sparender Aufbau eines hydrothermalen Karnonisierungsreaktors möglich, wobei die Länge des Reaktorrohres besonders groß ist im Verhältnis zum Durchmesser.

Das dem hydrothermalen Reaktor entnommene Endprodukt kann einer weiteren Verarbeitung zugeführt werden. Auch dem Reaktor entnommene Zwischenprodukte können einer weiteren Verarbeitung zugeführt werden. Die weitere Verarbeitung der Produkte bzw. Zwischenprodukte kann zunächst darin bestehen, das Produkt vom noch im Produkt enthaltenen Wasser, beispielsweise mit Hilfe einer Filtereinrichtung, zu trennen. Das abgetrennte Wasser kann in einer Form des hydrothermalen Reaktors zurück zum Zufluss 31 geleitet werden, um als Wasserzugabe für die zu bearbeitende Biomasse verwendet zu werden. Die weitere Nachverarbeitung der Zwischenprodukte bzw. Endprodukte kann zu den eingangs beschriebenen Produkten führen.

In einer weiteren, in der Zeichnung nicht gezeigten Ausführungsform, kann das letzte Reaktorsegment bzw. das der Abkühlphase zugeordnete Reaktorsegment so ausgestaltet sein, dass eine Abtrennen des noch in dem Endprodukt enthaltenen Wassers bereits in dem Reaktorinneren bewerkstelligt werden kann. Dazu kann bei einem im Wesentlichen horizontal ausgerichteten Reaktorrohr im Inneren des letzten Reaktorabschnittes, bevorzugt nahe der unteren Reaktorwandung, eine Filtereinrichtung vorgesehen sein, über welche die verarbeitete Biomasse während des Karbonisierungsprozesses geführt wird, so dass zumindest ein Teil des Wasser durch die Filtereinrichtung hindurch zum Reaktorboden gelangen kann. Der Austrag des Endproduktes aus dem Reaktor kann dann derart erfolgen, dass abgeschiedenes Wasser und Endprodukte getrennt voneinander austragbar sind.

Dadurch wird erreicht, dass das ausgetragene Endprodukt nur mehr einen geringen Feuchtigkeitsgrad aufweist, da Abkühlen und Abtrennen von Wasser im Wesentlichen gleichzeitig im letzen Reaktorabschnitt vorgenommen. Vorteilhaft ist hierbei, dass das Endprodukt in den Fällen in denen die Nachverarbeitung ein bereits trockenes oder nahezu trockenes Endprodukt voraussetzt direkt und ohne Zwischenschaltung einer Trockenstufe der Nachverarbeitung zugeführt werden kann.

Wie aus Fig. 2 und Fig. 4 ersichtlich ist, ist der gesamte Reaktor 10 als ein durchgängiges Reaktorrohr ausgestaltet, wobei die einzelnen Reaktionsphasen jeweils einem Abschnitt des Reaktorrohres zugeordnet sind.

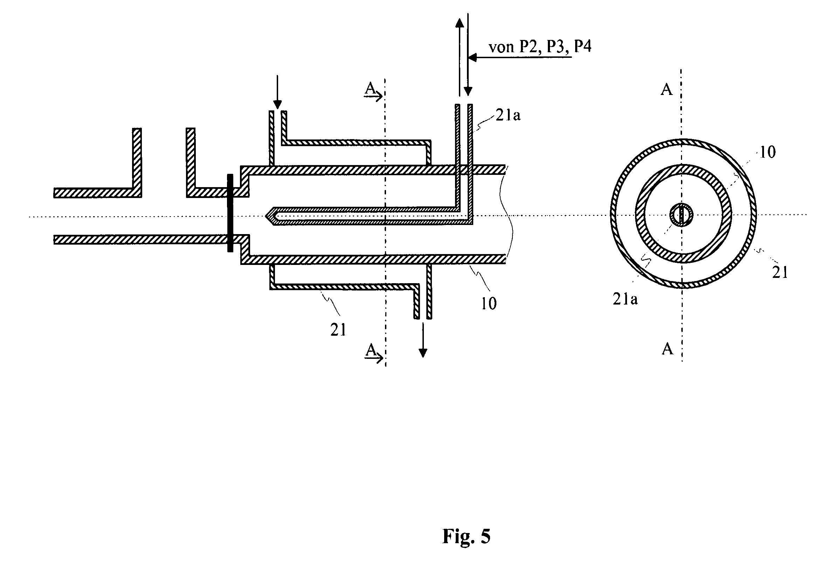

**Fig. 5** zeigt eine besondere Ausgestaltung eines Reaktorsegments mit einer im Innern des Reaktorsegments angeordneten Heizeinrichtung. In Fig. 5 ist beispielhaft das erste Reaktorsegment eines hydrothermalen Karbonisierungsreaktors dargestellt. Um ein besonders gleichmäßiges Aufheizen der sich im ersten Reaktorsegment befindlichen Biomasse zu ermöglichen, ist im Innern des Reaktorsegments eine weitere Heizeinrichtung 21a vorgesehen. Die im ersten Reaktorsegment enthaltene Biomasse wird so von der Heizeinrichtung 21 und von der Heizeinrichtung 21 a besonders gleichmäßig und besonders schnell auf die erforderliche Temperatur von ca. 180°C gebracht. Dadurch kann der Reaktorabschnitt, welcher der ersten Phase des Karbonisierungsprozesses zugeordnet ist, besonders kompakt, d.h. besonders kurz ausgestaltet werden.

In einer Ausführungsform kann die Heizeinrichtung 21 a als ein segmentiertes Rohr ausgestaltet sein, welches über einen Zufluss und über einen Abfluss zur Durchleitung eines Thermofluids verfügt. Das Thermofluid wird durch ein erstes Segment des Rohrs in das Rohr eingebracht und durch das zweite Segment des Rohrs wieder entnommen. Das Rohr wird bevorzugt an einer Stelle des Reaktorrohrs von außen in das Innere des Reaktors geführt. Die Übergangsstellen des Reaktorrohrs mit der Heizeinrichtung 21 a sind dabei vorzugsweise thermisch bzw. druckdicht ausgestaltet. Die Heizeinrichtung 21a ist vorzugsweise entlang der Längsachse und zentral im Rohr angeordnet. Die sich im Bereich der Einlassöffnung 11 befindliche Spitze der Heizeinrichtung 21 a ist dabei vorzugsweise so ausgestaltet, dass das Heizelement möglichst wenig Widerstand für das Einbringen der Biomasse in den Reaktor aufweist, bzw. dass Ablagerungen an der Heizeinrichtung 21 a minimiert werden. Die Spitze der Heizeinrichtung 21 a ist vorzugsweise spitz bzw. abgerundet ausgestaltet. Auf der rechten Seite der Fig. 5 ist das Reaktorsegment samt Heizeinrichtung 21a im Querschnitt A-A gezeigt.

Eine derartige Einrichtung kann auch im letzten Reaktorsegment als zusätzliche im Inneren des Reaktorrohrs angeordnete Kühleinrichtung vorgesehen sein, um den Abkühlvorgang des auszutragenden Endproduktes zu unterstützen.

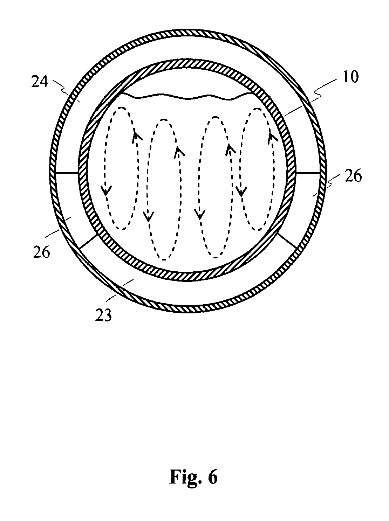

**Fig. 6** zeigt eine besonders vorteilhafte Ausgestaltung einer Heiz/Kühleinrichtung im Querschnitt. Die Heiz-/Kühleinrichtung ist als Heiz-/Kühlmantel um das Reaktorrohr herum angeordnet, welche geeignet ist, ein Thermofluid aufzunehmen. Der Heiz-/Kühlmantel weist zwei Kammern 23, 24 auf, welche sich parallel zur Längsachse an der Reaktorwandung erstrecken. Vorteilhafterweise sind die Kammern 23, 24 thermisch voneinander getrennt. Die thermische Trennung kann auch durch eine dritte Kammer 26 realisiert werden, in welche ein Isoliermittel eingebracht wird.

In einer Ausführungsform kann die untere Kammer 23 als Heizeinrichtung betrieben werden, indem ein entsprechend erhitztes Thermofluid durch die Kammer 23 gleitet wird. Die obere Kammer 24 kann deaktiviert sein oder als Kühleinrichtung betrieben werden. Beim Betrieb als Kühleinrichtung wird durch die obere Kammer 24 ebenfalls ein Thermofluid durchgeleitet, mit welchem die Hitze an der Reaktorwandung abgeführt wird.

Durch den Betrieb der unteren Kammer 23 als Heizung und der oberen Kammer 24 als Kühlung stellt sich im Inneren des Reaktorrohres vom Boden des Rohres nach oben hin ein Temperaturverlauf ein, welcher ein Durchmischen der sich im Reaktorrohr befindlichen Biomasse bewirkt. Verläuft der Karbonisierungsprozess exotherm, z.B. in der zweiten Phase, kann die untere Kammer 23 deaktiviert werden und nur die obere Kammer 24 als Kühleinrichtung betrieben werden, sodass sich ein Temperaturverlauf vom Boden des Reaktors nach oben hin einstellt.

Das Durchmischen der Biomasse hat den Vorteil, dass Ablagerungen an der Innenwand des Reaktorrohres effizient vermieden werden können, ohne dass mechanische Hilfsmittel im Inneren des Reaktorrohres vorgesehen werden müssen.

Das Verfahren der hydrothermalen Karbonisierung gemäß der vorliegenden Erfindung läuft im Wesentlichen folgendermaßen ab:

Zunächst wird Biomasse in das Innere des Reaktors eingeführt. Ein erster Teil des Reaktors wird dann mit der am Reaktor angeordneten Heizeinrichtung (bzw. mit der zusätzlichen im Inneren des Reaktors angeordneten Heizeinrichtung 21 a) so erwärmt, dass der hydrothermale Karbonisierungsprozess in Gang gesetzt wird bzw. aufrechterhalten bleibt. Nach dem ersten Einbringen von Biomasse in den Reaktor wird das Verfahren kontinuierlich bzw. quasikontinuierlich betrieben, d.h. es kann kontinuierlich bzw. quasi-kontinuierlich Biomasse dem Reaktor zugeführt werden, während der Karbonisierungsprozess der sich bereits im Reaktor befindlichen Biomasse in vollem Gange ist.

An mindestens einem zweiten Teil des Reaktors ist eine Heiz/Kühleinrichtung angeordnet, mit der der zumindest zweite Teil des Reaktors abgekühlt wird. Dies ist notwendig, um die Temperaturbedingungen für den Reaktionsprozess innerhalb eines bestimmten Bereichs, vorzugsweise zwischen 150°C und 250°C, besonders bevorzugt zwischen 180°C und 210°C zu halten. Synchron zum Zuführen der Biomasse in den Reaktor werden Zwischenprodukte und/oder Endprodukte dem Reaktor entnommen.

Die Entnahme der Zwischen- bzw. Endprodukte erfolgt derart, dass der Innendruck des Reaktors bzw. die Innentemperatur des Reaktors im Wesentlichen aufrechterhalten bleibt. Dazu wird zunächst eine eingangsseitig angeordnete Verschlussvorrichtung 32 geöffnet, durch die mit Hilfe einer Einbringvorrichtung, bevorzugt einer Kolbenpumpe, Biomasse in das Innere des Reaktors eingebracht wird. Gleichzeitig wird ausgangsseitig eine weitere Verschlussvorrichtung 80 geöffnet, durch welche das Endprodukt dem Reaktor entnommen werden kann. Bevor die Biomasse dem Reaktor zugeführt wird, wird diese mit Hilfe einer Zerkleinerungsvorrichtung in im Wesentlichen gleich große Partikel zerkleinert. Gleichzeitig oder im Anschluss daran wird, falls der Wasseranteil in der Biomasse zu niedrig ist, der Biomasse zusätzlich Wasser zugeführt. Um den Karbonisierungsprozess zu steuern bzw. zu beschleunigen, wird der zuzuführenden Biomasse ein Katalysator, vorzugsweise Zitronensäure, beigemengt. Mit einer Rühreinrichtung werden Wasser, Biomasse und Katalysator gleichmäßig vermengt.

Um einen ersten Teil des hydrothermalen Reaktors bzw. die darin befindliche Biomasse auf die gewünschte Temperatur zu bringen, wird einer am ersten Teil des Reaktors angeordneten Heizeinrichtung ein Thermofluid zugeführt, welches beim Anfahren des Prozesses von einer externen Heizeinrichtung erhitzt wird und während des Karbonisierungsprozesses zumindest teilweise von der Abwärme der nachfolgenden Phasen erhitzt wird. An den, den nachfolgenden Prozessphasen zugeordneten Reaktoreinheiten sind ein oder mehrere Heiz/Kühleinrichtungen angeordnet. Diesen Heiz/Kühleinrichtungen wird ebenfalls ein Thermofluid zugeführt, mit welchem die überschüssige Wärmeenergie abgeführt wird, um insbesondere das Reaktorsegment, welches der zweiten Phase zugeordnet ist, in einem vordefinierten Temperaturbereich zu halten. Die abgeführte Wärmeenergie wird vollständig oder teilweise der Heizeinrichtung der ersten Phase zurückgeführt bzw. zum Aufheizen des der ersten Phase zugeführten Thermofluids verwendet. Alternativ wird ein Teil des von der Kühleinrichtung abgeführten Thermofluids einem Wärmetauscher zugeführt.

In einer weiteren Ausgestaltung wird ein Teil des von der Heiz/Kühleinrichtung abgeführten Thermofluids dazu verwendet, das noch wässrige Endprodukt zu trocknen.

Während des Karbonisierungsvorgangs wird zumindest die Innentemperatur bzw. der Innendruck jenes Reaktorteils fortlaufend überwacht, in welchem die zweite Phase des Karbonisierungsprozesses abläuft, da in dieser Prozessphase die Prozessführung und die Prozesskontrolle von besonderer Bedeutung ist.

Die erfindungsgemäße Vorrichtung zur hydrothermalen Karbonisierung von Biomasse kann auch zur Verarbeitung von Schlämmen eingesetzt werden. Bei der hydrothermalen Karbonisierung von Schlämmen wird dem Schlamm vor der Zuführung in den Reaktor bei Bedarf feste Biomasse beigemengt.

Das in den entnommenen Zwischenprodukten bzw. Endprodukten enthaltene Wasser wird, bevorzugt nach einem zusätzlichen Abkühlvorgang, von dem Zwischenprodukt bzw. Endprodukt abgeschieden. Das abgeschiedene Wasser wird zur weiteren Verwendung als Wasserbeigabe zur Biomasse an den Eingangsbereich des Reaktors zurückgeführt.

Vorteilhaft ist es, den gesamten Karbonisierungsprozess bzw. den Vorgang des Einführens von Biomasse in den Reaktor und den Vorgang des Entnehmens von Biomasse bzw. der Produkte aus dem Reaktor zu überwachen. Zu diesem Zweck sind im und am Reaktor mehrere Sensoreinheiten vorgesehen, welche zumindest den Innendruck und die Innentemperatur des Reaktors aufnehmen. Die Sensorwerte werden einer oder mehreren Regel- bzw. Steuereinheiten zugeführt, welche aufgrund der Messergebnisse die entsprechenden Reaktorbestandteile steuern. Die Steuereinheit kann vorgesehen sein, um zu steuern:
- die eingangsseitig angeordneten Verschlussvorrichtungen 32, 33 sowie den Sicherheitsverschluss 35,
- die ausgangsseitig angeordneten Verschlussvorrichtungen 80, 81,
- die an der Auslassöffnung 70 angeordneten Verschlussvorrichtungen 71, 72
- die Einbringvorrichtung bzw. die Kolbenpumpe 34,
- die Zuführtemperatur bzw. die Zuführgeschwindigkeit des Thermofluid in die Heizeinrichtung 21 bzw. die Kühleinrichtung 22 (bzw. in die Heinzeinrichtung 21a),
- die Fördereinrichtung bzw. Förderpumpe 90, sowie
- die Kolbenpumpe 75.

Bevorzugt wird die Regelung bzw. die Steuerung des Reaktionsprozesses von einer zentralen Regel- bzw. Steuereinrichtung vorgenommen, welche auch Software-basiert erfolgen kann. Sämtliche der hier angegebenen gesteuerten Einheiten des hydrothermalen Reaktors können durch die Steuereinrichtung so aufeinander abgestimmt werden, dass das mit dem erfindungsgemäßen hydrothermalen Reaktor durchgeführte Verfahren eine besonders positive Energiebilanz aufweist sowie, dass die mit dem Verfahren gewonnenen Endprodukte eine besonders hohe Qualität aufweisen.

### Bezugzeichenliste

- 10: Reaktor bzw. Reaktorrohr bzw. aus mehreren Rohrsegmenten bestehendes Reaktorrohr
- 10a, 10b,: 10c, 10d rohrförmige Reaktorsegmente
- 11: Einlassöffnung
- 12: Auslassöffnung
- 15: Längsachse des Reaktorrohres
- 13: Entnahmeeinrichtung
- 21: Heizeinrichtung
- 21 a: Heizeinrichtung im Reaktorinneren
- 22: Kühleinrichtung
- 23: erste Kammer der Heiz-/Kühleinrichtung
- 24: zweite Kammer der Heiz-/Kühleinrichtung
- 25: Paddel
- 26: Luft bzw. Isolierschicht
- 30: Zuführeinrichtung
- 31: Zufluss
- 32: einlassseitige Verschlussvorrichtung
- 33: zuflussseitige Verschlussvorrichtung
- 34: Einbringvorrichtung (Kolbenpumpe)
- 35: Sicherheitsventil
- 40: Rührwerk
- 50: Wärmetauscher
- 60: Feuchtigkeitssensor
- 61: Drucksensor
- 70: Auslassöffnung
- 71, 72: hintereinander angeordnete Verschlussvorrichtungen für Zwischen-produkte
- 73: Schleußeneinrichtung für Zwischenprodukte
- 75: Ausbringmittel für Zwischenprodukte (Kolbenpumpe)
- 80, 81: auslassseitige hintereinander angeordnete Verschlussvorrichtungen
- 90: Fördereinrichtung

## Patentansprüche

1. Vorrichtung zur kontinuierlichen hydrothermalen Karbonisierung von Biomasse, aufweisend einen in vier Reaktorabschnitte (P1, P2, P3, P4) unterteilten Reaktor (10), durch welchen die zu behandelnde Biomasse kontinuierlich hindurch förderbar ist, wobei jeder der Reaktorabschnitte rohrförmig ausgestaltet ist, wobei die Reaktorabschnitte zusammen ein durchgängiges Reaktorrohr bilden, wobei das Reaktorrohr horizontal ausgerichtet ist, und wobei
- der erste Reaktorabschnitt (P1) zum Aufheizen der Biomasse ausgestaltet ist, wobei an dem ersten Reaktorabschnitt eine ein Thermofluid aufnehmende Heizeinrichtung angeordnet ist, welche ausgestaltet ist, die Biomasse auf eine Temperatur zwischen 160°C und 210°C zu erwärmen,
- der zweite Reaktorabschnitt (P2) zum Durchführen eines Polymerprozesses ausgestaltet ist, wobei an dem zweiten Reaktorabschnitt eine erste ein Thermofluid aufnehmende Heiz-/Kühleinrichtung angeordnet ist, welche ausgestaltet ist, die Biomasse auf einer Temperatur zwischen 170°C und 220°C zu halten,
- der dritte Reaktorabschnitt (P3) zum Durchführen eines Reifungsprozesses ausgestaltet ist, wobei an dem dritten Reaktorabschnitt eine zweite ein Thermofluid aufnehmende Heiz-/Kühleinrichtung angeordnet ist, welche ausgestaltet ist, die Biomasse auf einer Temperatur zwischen 190°C und 210°C zu halten, und
- der vierte Reaktorabschnitt (P4) zum Abkühlen der Biomasse ausgestaltet ist, wobei an dem vierten Reaktorabschnitt eine ein Thermofluid aufnehmende Kühleinrichtung angeordnet ist, welche ausgestaltet ist, die Biomasse auf eine Temperatur unterhalb von 180°C abzukühlen, und
wobei zumindest der erste, der zweite und der dritte Reaktorabschnitt (P1, P2, P3) druckbeständig ausgestaltet sind, und
wobei die erste Heiz-/Kühleinrichtung mit der zweiten Heiz-/Kühleinrichtung so gekoppelt ist, damit zumindest ein Teil des Thermofluids der ersten Heiz-/Kühleinrichtung der zweiten Heiz-/Kühleinrichtung zuführbar ist.

2. Vorrichtung nach Anspruch 1, wobei zumindest eine der Heiz-/Kühleinrichtungen (21, 22) als ein das Reaktorrohr (10) umgebenden Heiz-/Kühlmantel ausgestaltet ist, wobei der Heiz-/Kühlmantel mindestens zwei Kammern (23, 24) aufweist, welche thermisch voneinander getrennt sind, wobei die Kammern (23, 24) des Heiz-/Kühlmantels parallel zur Längsachse des Reaktors (10) verlaufen und wobei eine erste Kammer (23) als Heizeinrichtung ausgestaltet ist und eine zweite Kammer (24) als Kühleinrichtung ausgestaltet ist.

3. Vorrichtung nach einem der vorhergehenden Ansprüche, wobei das Reaktorrohr (10) eine Anzahl miteinander gekoppelter Reaktorsegmente (10a, 10b, 10c, 10d) aufweist, wobei die Reaktorsegmente so miteinander gekoppelt sind, dass eine druckdichte Koppelung der Reaktorsegmente erreichbar ist und wobei die einzelnen Reaktorsegmente mit einer Fördereinrichtung (90) miteinander gekoppelt sind.

4. Vorrichtung nach einem der vorhergehenden Ansprüche, wobei das Reaktorrohr eine an der Einlassöffnung (11) angeordnete Zuführeinrichtung (30) und eine an der Zuführeinrichtung (30) angeordnete Einbringvorrichtung (34) zum Einbringen der sich in der Zuführeinrichtung befindlichen Biomasse in das Reaktorrohr (10) aufweist, wobei die Zuführeinrichtung (30) einen Zufluss (31), eine einlassseitige Verschlussvorrichtung (32) und eine zuflussseitige Verschlussvorrichtung (33) aufweist, wobei die Verschlussvorrichtungen (32, 33) abwechselnd öffenbar sind, und wobei an der Auslassöffnung (12) zumindest zwei hintereinander liegende Verschlussvorrichtungen (80, 81) angeordnet sind, wobei die erste Verschlussvorrichtung (80) synchron zur einlassseitig angeordneten Verschlussvorrichtung (32) öffenbar ist, wobei die Verschlussvorrichtungen (80, 81) abwechselnd öffenbar sind, wobei der Zufluss (31) trichterförmig ausgestaltet ist, wobei im Zufluss (31) ein Rührwerk (40) und/oder eine Zerkleinerungsvorrichtung angeordnet ist, wobei an der Zuführeinrichtung (30) ein Drucksensor (61) angeordnet ist und wobei der Drucksensor (61) mit der einlassseitigen Verschlussvorrichtung (32) und/oder mit der zuflussseitigen Verschlussvorrichtung (33) gekoppelt ist.

5. Vorrichtung nach einem der Ansprüche 3 oder 4, wobei zumindest ein Reaktorsegment (10a, 10b, 10c, 10d) drehbar um die eigene Längsachse (15) ausgestaltet ist.

6. Vorrichtung nach einem der vorhergehenden Ansprüche, wobei das Reaktorrohr eine Auslassöffnung (70) zur Entnahme von Zwischenprodukten aufweist, und wobei an der Auslassöffnung (70) zumindest zwei hintereinander angeordnete Verschlussvorrichtungen (71, 72) angeordnet sind.

7. Verfahren zur hydrothermalen Karbonisierung von Biomasse, wobei Biomasse als Edukt kontinuierlich einem druckbeständigen und durchgängigen rohrförmig ausgestalteten Reaktor (10) über mindestens eine Einlassöffnung (11) zugeführt wird, wobei der vordere Teil des Reaktors mit einer ein Thermofluid aufnehmenden Heizeinrichtung auf eine Temperatur zwischen 160°C und 210°C erwärmt wird, um den hydrothermalen Karbonisierungsprozess in Gang zu setzen, wobei der zweite Teil des Reaktors mit einer ersten ein Thermofluid aufnehmenden Heiz-/Kühleinrichtung auf einer Temperatur zwischen 170°C und 220°C gehalten wird, wobei der dritte Teil des Reaktors mit einer zweiten ein Thermofluid aufnehmenden Heiz-/Kühleinrichtung auf einer Temperatur zwischen 190°C und 210°C gehalten wird, um den Karbonisierungsprozess aufrecht zu erhalten, wobei der hintere Teil des Reaktors mit einer ein Thermofluid aufnehmenden Kühleinrichtung auf eine Temperatur unterhalb von 180°C abgekühlt wird, um den Karbonisierungsprozess zu beenden, und wobei zumindest ein Teil des Therrnofluids der ersten Heiz-/Kühleinrichtung der zweiten Heiz-/Kühleinrichtung zugeführt wird.

8. Verfahren nach Anspruch 7, wobei synchron zum Zuführen des Edukts Endprodukte und/oder Zwischenprodukte dem Reaktor entnommen werden, wobei das Zufiihren und die Entnahme derart erfolgt, dass der Innendruck des Reaktors aufrechterhalten bleibt, und wobei dem Edukt, bevor es dem Reaktor zugeführt wird, Wasser und/oder ein Katalysator, vorzugsweise Zitronensäure, zugegeben wird.

9. Verfahren nach einem der Ansprüche 7 oder 8, wobei das in den entnommenen Zwischenprodukten bzw. Endprodukten enthaltene Wasser abgeschieden wird und wobei zumindest ein Teil des abgeschiedenen Wassers dem Edukt zugeführt wird.

## Claims

1. Device for the continuous hydrothermal carbonization of biomass comprising a reactor (10), divided in four reactor sections (P1, P2, P3, P4), through which the biomass to be processed can be continuously conveyed, whereby each of the reactor sections is designed as a tube, whereby the reactor sections form together a continuous reactor tube, whereby the reactor tube is oriented horizontally and whereby
- the first reactor section (P1) is designed to heat up the biomass, whereby a thermofluid receiving heating device is placed on the first reactor section, this heating device being designed to heat up the biomass to a temperature between 160°C and 210°C,
- the second reactor section (P2) is designed to carry out a polymer process, whereby a first thermofluid receiving heating/cooling device is placed on the second reactor section, this first heating/cooling device being designed to maintain the biomass at a temperature between 170°C and 220°C,
- the third reactor section (P3) is designed to carry out a maturing process, whereby a second thermofluid receiving heating/cooling device is placed on the third reactor section, this second heating/cooling device being designed to maintain the biomass at a temperature between 190°C and 210°C and
- the fourth reactor section (P4) is designed to cool down the biomass, whereby a thermofluid receiving cooling device is placed on the fourth reactor section, this cooling device being designed to cool down the biomass to a temperature below 180°C and
whereby at least the first, the second and the third reactor sections (P1, P2, P3) are designed pressure resistant and
whereby the first heating/cooling device is coupled with the second heating/cooling device in such a manner that at least one part of the thermofluid of the first heating/cooling device can be supplied to the second heating/cooling device.

2. Device according to claim 1, whereby at least one of the heating/cooling devices (21, 22) is designed as a heating/cooling jacket surrounding the reactor tube (10), whereby the heating/cooling jacket has at least two chambers (23, 24) which are thermally separated from one another, whereby the chambers (23, 24) of the heating/cooling jacket are running parallel to the longitudinal axis of the reactor (10) and whereby a first chamber (23) is designed as a heating device and a second chamber (24) is designed as a cooling device.

3. Device according to any of the preceding claims, whereby the reactor tube (10) comprises a number of reactor segments (10a, 10b, 10c, 10d) coupled with each other, whereby the reactor segments are coupled with each other in such a manner that a pressure-tight coupling of the reactor segments can be achieved and whereby the single reactor segments are coupled with each other with a conveying device (90).

4. Device according to any of the preceding claims, whereby the reactor tube (10) comprises a feeding device (30) placed at the inlet opening (11) and an introducing device (34) placed on the feeding device (30) for introducing the biomass which is in the feeding device into the reactor tube (10), whereby the feeding device (30) comprises an inflow (31), an inlet-sided locking device (32) and an inflow-sided locking device (33), whereby the locking devices (32, 33) can be alternately opened and whereby at least two locking devices (80, 81) placed the one behind the other can be opened synchronously with the inlet-sided placed locking device (32), whereby the locking devices (80, 81) can be alternately opened, whereby the inflow (31) is designed funnel-shaped, whereby a stirrer (40) and/or a crushing device is placed in the inflow (31), whereby a pressure sensor (61) is placed on the feeding device (30) and whereby the pressure sensor (61) is coupled with the inlet-sided locking device (32) and/or with the inflow-sided locking device (33).

5. Device according to one of the claims 3 or 4, whereby at least a reactor segment (10a, 0b, 10c, 10d) is designed rotatable about the own longitudinal axis (15).

6. Device according to one of the preceding claims, whereby the reactor tube comprises an outlet opening (70) for the withdrawal of intermediate products and whereby at least two locking devices (71, 72) placed the one behind the other are placed at the outlet opening (70).

7. Method for the hydrothermal carbonization of biomass, whereby biomass is supplied as reactant continuously to a pressure resistant and continuous reactor configured as a tube (10) over at least one inlet opening (11), whereby the front part of the reactor is heated with a thermofluid receiving heating device to a temperature between 160°C and 210°C in order to initiate the hydrothermal carbonization process, whereby the second part of the reactor with a first thermofluid receiving heating/cooling device is maintained at a temperature between 170°C and 220°C, whereby the third part of the reactor with a second thermofluid receiving heating/cooling device is maintained at a temperature between 190°C and 210°C in order to maintain the carbonization process, whereby the rear part of the reactor with a thermofluid receiving cooling device is cooled down to a temperature below 180°C in order to terminate the carbonization process and whereby at least one part of the thermofluid of the first heating/cooling device is fed to the second heating/cooling device.

8. Method according to claim 7, whereby end products and/or intermediate products are synchronously withdrawn from the reactor to feed the reactant, whereby the feeding and the withdrawal take place in such a manner that the inner pressure of the reactor is maintained and whereby water and/or a catalyst, preferably citric acid, is added to the reactant before it is fed to the reactor.

9. Method according to one of the claims 7 or 8, whereby the water contained in the withdrawn intermediate products or end products is eliminated and whereby at least one part of the eliminated water is supplied to the reactant.

## Revendications

1. Dispositif pour la carbonisation hydrothermale continue de biomasse présentant un réacteur (10), divisé en quatre sections de réacteur (P1, P2, P3, P4), par lequel la biomasse à traiter peut être acheminée en continu, chacune des sections de réacteur étant configurée en forme de tube, les sections de réacteur formant ensemble un tube de réacteur continu, le tube de réacteur étant orienté à l'horizontale et
- la première section de réacteur (P1) étant configurée pour réchauffer la biomasse, un dispositif de chauffage qui reçoit un thermofluide étant placé sur la première section de réacteur, dispositif de chauffage qui est configuré pour réchauffer la biomasse à une température entre 160°C et 210°C,
- la seconde section de réacteur (P2) étant configurée pour exécuter un processus de polymère, un premier dispositif de chauffage/refroidissement qui reçoit un thermofluide étant placé sur la seconde section de réacteur, ce premier dispositif de chauffage/refroidissement étant configuré pour maintenir la biomasse à une température entre 170°C et 220°C,
- la troisième section de réacteur (P3) étant configurée pour exécuter un processus de maturation, un second dispositif de chauffage/refroidissement qui reçoit un thermofluide étant placé sur la troisième section de réacteur, ce second dispositif de chauffage/refroidissement étant configuré pour maintenir la biomasse à une température entre 190°C et 210°C et
- la quatrième section de réacteur (P4) étant configurée pour refroidir la biomasse, un dispositif de refroidissement qui reçoit un thermofluide étant placé sur la quatrième section de réacteur, ce dispositif de refroidissement étant configuré pour refroidir la biomasse à une température inférieure à 180°C et
au moins la première, la seconde et la troisième section de réacteur (P1, P2, P3) étant configurées résistantes à la pression et
le premier dispositif de chauffage/refroidissement étant couplé au second dispositif de chauffage/refroidissement de telle manière qu'au moins une partie du thermofluide du premier dispositif de chauffage/refroidissement peut être amené au second dispositif de chauffage/refroidissement.

2. Dispositif selon la revendication 1, au moins l'un des dispositifs de chauffage/refroidissement (21, 22) étant configuré comme une enveloppe de chauffage/refroidissement qui entoure le tube de réacteur (10), l'enveloppe de chauffage/refroidissement présentant au moins deux compartiments (23, 24) qui sont séparés thermiquement l'un de l'autre, les compartiments (23, 24) de l'enveloppe de chauffage/refroidissement étant parallèles à l'axe longitudinal du réacteur (10) et un premier compartiment (23) étant configuré comme dispositif de chauffage un second compartiment (24) étant configuré comme dispositif de refroidissement.

3. Dispositif selon l'une des revendications précédentes, le tube de réacteur (10) présentant un certain nombre de segments de réacteur (10a, 10b, 10c, 10d) couplés l'un à l'autre, les segments de réacteur étant couplés l'un à l'autre de telle manière qu'un accouplement étanche à la pression des segments de réacteur peut être obtenu et les différents segments de réacteur étant couplés l'un à l'autre avec un dispositif d'acheminement (90).

4. Dispositif selon l'une des revendications précédentes, le tube de réacteur présentant un dispositif d'alimentation (30) placé à l'ouverture d'entrée (11) et un dispositif d'amenée (34) placé sur le dispositif d'alimentation (30) pour amener la biomasse qui se trouve dans le dispositif d'alimentation dans le tube de réacteur (10), le dispositif d'alimentation (30) présentant une arrivée (31), un dispositif de fermeture côté entrée (32) et un dispositif de fermeture côté arrivée (33), les dispositifs de fermeture (32, 33) pouvant être ouverts en alternance et au moins deux dispositifs de fermeture (80, 81) qui se situent l'un derrière l'autre étant placés à l'ouverture de sortie (12), le premier dispositif de fermeture (80) pouvant être ouvert de manière synchrone avec le dispositif de fermeture placé côté entrée (32), les dispositifs de fermeture (80, 81) pouvant être ouverts en alternance, l'arrivée (31) étant configurée en forme d'entonnoir, un agitateur (40) et/ou un dispositif de broyage étant placé dans l'arrivée (31), un capteur de pression (61) étant placé dans le dispositif d'alimentation (30) et le capteur de pression (61) étant couplé avec le dispositif de fermeture côté entrée (32) et/ou avec le dispositif de fermeture côté arrivée (33).

5. Dispositif selon l'une des revendications 3 ou 4, au moins un segment de réacteur (10a, 10b, 10c, 10d) étant configuré rotatif autour de son propre axe longitudinal (15).

6. Dispositif selon l'une des revendications précédentes, le tube de réacteur présentant une ouverture de sortie (70) pour prélever des produits intermédiaires et au moins deux dispositifs de fermeture placés l'un derrière l'autre (71, 72) étant placés à l'ouverture de sortie (70).

7. Procédé pour la carbonisation hydrothermale de biomasse, la biomasse étant amenée en tant que réactif en continu à un réacteur (10) résistant à la pression et configuré en forme de tube continu par au moins une ouverture d'entrée (11), la partie antérieure du réacteur étant réchauffée avec un dispositif de chauffage qui reçoit un thermofluide à une température entre 160°C et 210°C pour amorcer le processus de carbonisation hydrothermale, la seconde partie du réacteur étant maintenue avec un premier dispositif de chauffage/refroidissement qui reçoit un thermofluide à une température entre 170°C et 220°C, la troisième partie du réacteur étant maintenue avec un second dispositif de chauffage/refroidissement qui reçoit un thermofluide à une température entre 190°C et 210°C pour maintenir le processus de carbonisation, la partie postérieure du réacteur étant refroidie avec un dispositif de refroidissement qui reçoit un thermofluide à une température inférieure à 180°C pour terminer le processus de carbonisation et au moins une partie du thermofluide du premier dispositif de chauffage/refroidissement étant amenée au second dispositif de chauffage/refroidissement.

8. Procédé selon la revendication 7, des produits terminaux et/ou des produits intermédiaires étant prélevés du réacteur pour amener le réactif, l'amenée et le prélèvement se faisant de telle manière que la pression intérieure du réacteur reste maintenue et de l'eau et/ou un catalyseur, de préférence de l'acide citrique, étant ajouté au réactif avant qu'il soit amené au réacteur.

9. Procédé selon l'une des revendications 7 ou 8, l'eau contenue dans les produits intermédiaires ou produits terminaux étant éliminée et au moins une partie de l'eau éliminée étant amenée au réactif.
